# EUROPEAN PATENT APPLICATION

(11) **EP 4 664 985 A1**
(43) Date of publication of application: **17.12.2025**
(21) Application number: 24755881.0
(22) Date of filing: 17.01.2024
(51) Int. Cl.: H04W 28/02

(54) **COMMUNICATION METHOD AND DEVICE**

(30) Priority: 17.02.2023 CN 202310155795
(71) Applicant: Huawei Technologies Co., Ltd., Shenzhen, Guangdong 518129 (CN)
(72) Inventor: LIU, Nannan, Shenzhen, Guangdong 518129 (CN); QIANG, Li, Shenzhen, Guangdong 518129 (CN); LI, Bingzhao, Shenzhen, Guangdong 518129 (CN); LOU, Chong, Shenzhen, Guangdong 518129 (CN)
(74) Representative: Körber, Martin Hans
(86) International application number: PCT/CN2024/072731
(87) International publication number: WO 2024/169506

(57) **Abstract**

Embodiments of this application provide a communication method and a communication apparatus. The method includes: A first entity of a terminal apparatus indicates N data volumes to a first medium access control MAC entity of the terminal apparatus, where N is greater than or equal to 2. The terminal apparatus determines a first buffer status report BSR based on the N data volumes. In embodiments of this application, the first entity of the terminal apparatus indicates a plurality of data volumes to the MAC entity, to cause indication of the data volume to match reporting of the BSR, so that a network apparatus can more clearly learn of a buffer status of the terminal apparatus, and the network apparatus can appropriately allocate a resource, to improve uplink resource utilization and improve data transmission reliability.

## Description

This application claims priority to Chinese Patent Application No. 202310155795.2, filed with the China National Intellectual Property Administration on February 17, 2023 and entitled "COMMUNICATION METHOD AND APPARATUS", which is incorporated herein by reference in its entirety.

### TECHNICAL FIELD

This application relates to the communication field, and specifically, to a communication method and apparatus.

### BACKGROUND

As communication systems continuously develop, a data transmission delay continuously decreases, and a transmission capacity is increasingly large. 5th generation (5th generation, 5G) communication systems have given rise to some multimedia services with high requirements on real-time performance, such as video transmission, cloud gaming, extended reality (extended reality, XR), and a tactile internet. In respect of creating immersive experience for people during interaction with virtual worlds, XR services with ultra-high-bandwidth and ultra-low-latency requirements have attracted much attention.

A terminal apparatus may send a buffer status report (buffer status report or buffer status reporting, BSR) to a network apparatus, to notify the network apparatus of an amount of uplink buffer data to be transmitted on a current logical channel (logical channel, LCH) or logical channel group (logical channel group, LCG), so that the network apparatus appropriately allocates an uplink transmission resource to the terminal apparatus. Currently, for a service like an enhanced mobile broadband (Enhanced Mobile Broadband, eMBB) service or an ultra reliable low latency communication (Ultra Reliable Low Latency Communication, URLLC) service, a BSR includes a buffer status of data.

For some services (for example, an XR service), in addition to a buffer status of data included in a BSR, remaining time information of the data may further need to be explicitly or implicitly indicated in the BSR. An existing technology for indicating a PDCP data volume and indicating an RLC data volume cannot meet/match BSR reporting. How to indicate the PDCP data volume and the RLC data volume becomes an urgent problem to be resolved.

### SUMMARY

This application provides a communication method, in which a buffer status associated with remaining time information and a buffer status not associated with remaining time information can be simultaneously indicated to a network apparatus via one BSR.

According to a first aspect, a communication method is provided. The method may be performed by a terminal apparatus, or may be performed by a component (for example, a chip or a circuit) of the terminal apparatus. This is not limited in this application. For ease of description, the following uses an example in which the terminal apparatus performs the method for description.

The communication method includes: The terminal apparatus generates a first buffer status report BSR. The first BSR includes first indication information. The first indication information indicates that a remaining time field is present or absent, or indicates that a buffer size field associated with remaining time information is present or absent; or the first indication information indicates a quantity of remaining time fields or a quantity of buffer size fields associated with remaining time information. The terminal apparatus sends the first BSR.

Based on the foregoing technical solution, because both a buffer size field (or a remaining time field) associated with remaining time information and a buffer size field not associated with remaining time information may be included in one BSR, the terminal apparatus causes, based on first indication information in the BSR, a network apparatus to correctly understand a buffer status of the terminal apparatus, so that the network apparatus can appropriately allocate a resource, to improve uplink resource utilization, avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

With reference to the first aspect, in some implementations of the first aspect, the remaining time is less than or equal to a first time threshold.

Based on the foregoing technical solution, urgent data may be further distinguished by configuring the remaining time in the BSR to be less than or equal to the first time threshold, for example, data with a remaining time less than or equal to the first time threshold is urgent data, so that a transmission resource can be further accurately allocated based on an urgency degree of data.

With reference to the first aspect, in some implementations of the first aspect, the first indication information is associated with a first logical channel LCH or a first logical channel group LCG.

According to a second aspect, a communication method is provided. The method may be performed by a terminal apparatus, or may be performed by a component (for example, a chip or a circuit) of the terminal apparatus. This is not limited in this application. For ease of description, the following uses an example in which the terminal apparatus performs the method for description.

The communication method includes: The terminal apparatus generates a first buffer status report BSR. The first BSR includes N first buffer size fields and M second buffer size fields. The N first buffer size fields are associated with remaining time information, and the M second buffer size fields are not associated with remaining time information. The N first buffer size fields follow the M second buffer size fields. N is greater than or equal to 1, and M is greater than or equal to 1. The terminal apparatus sends the first BSR.

Based on the foregoing technical solution, when simultaneously indicating, to a network apparatus via one BSR, a buffer status associated with remaining time information and a buffer status not associated with remaining time information, the terminal apparatus can cause, via a location relationship between a buffer size field associated with remaining time information and a buffer size field not associated with remaining time information, the network apparatus to accurately understand a format of the BSR, so that the network apparatus can appropriately allocate a resource, to improve uplink resource utilization, avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

With reference to the second aspect, in some implementations of the second aspect, the remaining time is less than or equal to a first time threshold.

Based on the foregoing technical solution, urgent data may be further distinguished by configuring the remaining time in the BSR to be less than or equal to the first time threshold, for example, data with a remaining time less than or equal to the first time threshold is urgent data, so that a transmission resource can be further accurately allocated based on an urgency degree of data.

With reference to the second aspect, in some implementations of the second aspect, the first BSR explicitly or implicitly indicates the remaining time.

According to a third aspect, a communication method is provided. The method may be performed by a terminal apparatus, or may be performed by a component (for example, a chip or a circuit) of the terminal apparatus. This is not limited in this application. For ease of description, the following uses an example in which the terminal apparatus performs the method for description.

The communication method includes: The terminal apparatus generates a first buffer status report BSR. The first BSR includes N first buffer size fields, M second buffer size fields, and second indication information. The N first buffer size fields are associated with remaining time information, and the M second buffer size fields are not associated with remaining time information. The second indication information indicates a value of N or a quantity of bytes or bits occupied by the N first buffer size fields and a field related to the N first buffer size fields. The N first buffer size fields precede the M second buffer size fields, and the second indication information precedes N first buffer size field values. N is greater than or equal to 1, and M is greater than or equal to 1. The terminal apparatus sends the first BSR.

Based on the foregoing technical solution, when simultaneously indicating, to a network apparatus via one BSR, a buffer status associated with remaining time information and a buffer status not associated with remaining time information, the terminal apparatus can cause, via a location relationship between a buffer size field associated with remaining time information and a buffer size field not associated with remaining time information, the network apparatus to accurately understand a format of the BSR, so that the network apparatus can appropriately allocate a resource, to improve uplink resource utilization, avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

With reference to the third aspect, in some implementations of the third aspect, the remaining time is less than or equal to a first time threshold.

Based on the foregoing technical solution, urgent data may be further distinguished by configuring the remaining time in the BSR to be less than or equal to the first time threshold, for example, data with a remaining time less than or equal to the first time threshold is urgent data, so that a transmission resource can be further accurately allocated based on an urgency degree of data.

With reference to the third aspect, in some implementations of the third aspect, the first BSR explicitly or implicitly indicates the remaining time.

According to a fourth aspect, a communication method is provided. The method may be performed by a terminal apparatus, or may be performed by a component (for example, a chip or a circuit) of the terminal apparatus. This is not limited in this application. For ease of description, the following uses an example in which the terminal apparatus performs the method for description.

The communication method includes: The terminal apparatus generates a first buffer status report BSR. The first BSR or a medium access control MAC subheader corresponding to the first BSR includes reference time information. The reference time information is used for determining a remaining time corresponding to data. The terminal apparatus sends the first BSR.

Based on the foregoing technical solution, configuring a BSR or a medium access control (Medium Access Control, MAC) subheader to include reference time information causes a network apparatus to obtain actual remaining time information of data after the network apparatus receives the BSR, so that a base station can perform appropriate resource scheduling, to meet a delay requirement of the data of the terminal apparatus, thereby ensuring service reliability and service performance.

With reference to the fourth aspect, in some implementations of the fourth aspect, the reference time information indicates a time of generating the remaining time information indicated by the first BSR, or indicates a time of generating the first BSR, or indicates a time of sending the first BSR.

According to a fifth aspect, a communication method is provided. The method may be performed by a terminal apparatus, or may be performed by a component (for example, a chip or a circuit) of the terminal apparatus. This is not limited in this application. For ease of description, the following uses an example in which the terminal apparatus performs the method for description.

The communication method includes: The terminal apparatus generates a first buffer status report BSR. The first BSR includes third indication information and fourth indication information. The third indication information indicates an arrival time or expiration time of first data. The fourth indication information indicates an offset of an arrival time of second data relative to the arrival time of the first data, or indicates an offset of an expiration time of the second data relative to the expiration time of the first data. The terminal apparatus sends the first BSR.

Based on the foregoing technical solution, the terminal apparatus does not need to report an arrival time (or expiration time) for each piece of data, and may indicate only an arrival time (or expiration time) of one piece of data. In this way, air interface resources can be saved.

With reference to the fifth aspect, in some implementations of the fifth aspect, the first data is data earliest received by an access stratum (Access Stratum, AS) of the terminal apparatus.

According to a sixth aspect, a communication method is provided. The method may be performed by a terminal apparatus, or may be performed by a component (for example, a chip or a circuit) of the terminal apparatus. This is not limited in this application. For ease of description, the following uses an example in which the terminal apparatus performs the method for description.

The communication method includes: A first entity of the terminal apparatus indicates N data volumes to a first medium access control MAC entity of the terminal apparatus. N is greater than or equal to 2. The terminal apparatus determines a first BSR based on the N data volumes.

Based on the foregoing technical solution, for a problem that existing indication of a packet data convergence protocol (packet data convergence protocol, PDCP) data volume and indication of a radio link control (radio link control, RLC) data volume cannot meet/match reporting of a BSR with remaining time information, the first entity of the terminal apparatus may indicate one or more data volumes to a MAC entity, to cause the indication of the PDCP data volume and the indication of the RLC data volume to match the reporting of the BSR, so that a network apparatus can more clearly learn of a buffer status of the terminal apparatus, and the network apparatus can appropriately allocate a resource, to improve uplink resource utilization, avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

With reference to the sixth aspect, in some implementations of the sixth aspect, the first entity indicates, to the first MAC entity, remaining times associated with the N data volumes.

With reference to the sixth aspect, in some implementations of the sixth aspect, the first entity includes a first RLC entity.

With reference to the sixth aspect, in some implementations of the sixth aspect, the first entity includes a first PDCP entity, the first MAC entity is associated with the first RLC entity of the terminal apparatus, and the first PDCP entity is associated with the first RLC entity.

With reference to the sixth aspect, in some implementations of the sixth aspect, the N data volumes include a first data volume, where the first data volume includes a data volume of a control control protocol data unit (protocol data unit, PDU) set, and the first data volume corresponds to a minimum remaining time; or the first data volume includes a data volume of a first data set, and a remaining time corresponding to the first data set is less than a remaining time corresponding to another data set in the first entity different from the first data set.

Based on the foregoing embodiment, the terminal apparatus includes a data volume of a control PDU in a data volume corresponding to data with a minimum remaining time or a data volume corresponding to a minimum remaining time, so that the network apparatus can appropriately allocate a transmission resource based on the BSR reported by the terminal apparatus. This facilitates uplink resource scheduling of the network apparatus, and also benefits performance of the terminal apparatus, thereby ensuring normal service provision. Otherwise, if the data volume of the control PDU is included in a data volume corresponding to data with a relatively long remaining time, as a result, a resource allocated by a base station for data with a relatively short remaining time may be insufficient to transmit the control PDU and a data PDU. Consequently, the data PDU cannot be transmitted in accordance with a delay requirement. This results in a negative impact on service performance.

With reference to the sixth aspect, in some implementations of the sixth aspect, the remaining time is less than or equal to a first time threshold.

According to a seventh aspect, a communication method is provided. The method may be performed by a terminal apparatus, or may be performed by a component (for example, a chip or a circuit) of the terminal apparatus. This is not limited in this application. For ease of description, the following uses an example in which the terminal apparatus performs the method for description.

The communication method includes: A first PDCP entity of the terminal apparatus indicates N data volumes to a first MAC entity of the terminal apparatus associated with a first RLC entity of the terminal apparatus, where N is greater than or equal to 2; and/or the first PDCP entity indicates P data volumes to a second MAC entity of the terminal apparatus associated with a second RLC entity of the terminal apparatus, where P is greater than or equal to 2. The terminal apparatus determines a first BSR based on the N data volumes and/or the P data volumes, where the first PDCP entity is associated with the first RLC entity and the second RLC entity, the N data volumes include a data volume of data associated with the first RLC entity, and the P data volumes include a data volume of data associated with the second RLC entity.

Based on the foregoing embodiment, when indicating a data volume to a MAC entity of the terminal apparatus, a PDCP entity of the terminal apparatus indicates only one PDCP data volume for one RLC entity. This cannot meet/match reporting of a BSR with remaining time information. The PDCP entity of the terminal apparatus may separately indicate one or more data volumes to one or more MAC entities associated with an RLC entity, to cause indication of a PDCP data volume and indication of an RLC data volume to match the reporting of the BSR, so that the network apparatus can more clearly learn of a buffer status of the terminal apparatus, and the network apparatus can appropriately allocate a resource, to improve uplink resource utilization, avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

With reference to the seventh aspect, in some implementations of the seventh aspect, the method further includes: The first PDCP entity indicates, to the first MAC entity associated with the first RLC entity, remaining times associated with the N data volumes; and/or the first PDCP entity indicates, to the second MAC entity associated with the second RLC entity, remaining times associated with the P data volumes.

With reference to the seventh aspect, in some implementations of the seventh aspect, the N data volumes include a first data volume, where the first data volume includes a data volume of a control protocol data unit control PDU set, and the first data volume corresponds to a minimum remaining time, or the first data volume includes a data volume of a first data set, and a remaining time corresponding to the first data set is less than or equal to a remaining time corresponding to another data set in the first PDCP entity that is different from the first data set and that is associated with the first RLC entity; and/or the P data volumes include a second data volume, where the second data volume includes the data volume of the control protocol data unit control PDU set, where the second data volume corresponds to the minimum remaining time, or the second data volume includes a data volume of a second data set, and a remaining time corresponding to the second data set is less than a remaining time corresponding to another data set in the first PDCP entity that is different from the second data set and that is associated with the second RLC entity.

According to an eighth aspect, a communication method is provided. The method may be performed by a network apparatus, or may be performed by a component (for example, a chip or a circuit) of the network apparatus. This is not limited in this application. For ease of description, the following uses an example in which the network apparatus performs the method for description.

The communication method includes: The network apparatus receives a first BSR. The first BSR includes first indication information. The first indication information indicates that a remaining time field is present or absent, or indicates that a buffer size field associated with remaining time information is present or absent; or the first indication information indicates a quantity of remaining time fields or a quantity of buffer size fields associated with remaining time information. The network apparatus allocates a transmission resource based on the first BSR.

Based on the foregoing technical solution, because both a buffer size field (or a remaining time field) associated with remaining time information and a buffer size field not associated with remaining time information may be included in one BSR, the terminal apparatus causes, based on first indication information in the BSR, a network apparatus to correctly understand a buffer status of the terminal apparatus, so that the network apparatus can appropriately allocate a resource, to improve uplink resource utilization, avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

With reference to the eighth aspect, in some implementations of the eighth aspect, the remaining time is less than or equal to a first time threshold.

Based on the foregoing technical solution, urgent data may be further distinguished by configuring the remaining time in the BSR to be less than or equal to the first time threshold, for example, data with a remaining time less than or equal to the first time threshold is urgent data, so that an uplink transmission resource can be further accurately allocated based on an urgency degree of data.

With reference to the eighth aspect, in some implementations of the eighth aspect, the first indication information is associated with a first LCH or a first LCG.

According to a ninth aspect, a communication method is provided. The method may be performed by a network apparatus, or may be performed by a component (for example, a chip or a circuit) of the network apparatus. This is not limited in this application. For ease of description, the following uses an example in which the network apparatus performs the method for description.

The communication method includes: The network apparatus receives a first BSR. The first BSR includes N first buffer size fields and M second buffer size fields. The N first buffer size fields are associated with remaining time information, and the M second buffer size fields are not associated with remaining time information. The N first buffer size fields follow the M second buffer size fields. N is greater than or equal to 1, and M is greater than or equal to 1. The network apparatus allocates a transmission resource based on the first BSR.

Based on the foregoing technical solution, when simultaneously indicating, to the network apparatus via one BSR, a buffer status associated with remaining time information and a buffer status not associated with remaining time information, a terminal apparatus can cause, via relative locations of a buffer size field associated with remaining time information and a buffer size field not associated with remaining time information, the network apparatus to accurately understand a format of the BSR, so that the network apparatus can appropriately allocate a resource, to improve uplink resource utilization, avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

With reference to the ninth aspect, in some implementations of the ninth aspect, the remaining time is less than or equal to a first time threshold.

Based on the foregoing technical solution, urgent data may be further distinguished by configuring the remaining time in the BSR to be less than or equal to the first time threshold, for example, data with a remaining time less than or equal to the first time threshold is urgent data, so that an uplink transmission resource can be further accurately allocated based on an urgency degree of data.

With reference to the ninth aspect, in some implementations of the ninth aspect, the first BSR explicitly or implicitly indicates the remaining time.

According to a tenth aspect, a communication method is provided. The method may be performed by a network apparatus, or may be performed by a component (for example, a chip or a circuit) of the network apparatus. This is not limited in this application. For ease of description, the following uses an example in which the network apparatus performs the method for description.

The communication method includes: The network apparatus receives a first BSR. The first BSR includes N first buffer size fields, M second buffer size fields, and second indication information. The N first buffer size fields are associated with remaining time information, and the M second buffer size fields are not associated with remaining time information. The second indication information indicates a value of N or a quantity of bytes or bits occupied by the N first buffer size fields and a field related to the N first buffer size fields. The N first buffer size fields precede the M second buffer size fields, and the second indication information precedes N first buffer size field values. N is greater than or equal to 1, and M is greater than or equal to 1. The network apparatus allocates a transmission resource based on the first BSR.

Based on the foregoing technical solution, when simultaneously indicating, to the network apparatus via one BSR, a buffer status associated with remaining time information and a buffer status not associated with remaining time information, a terminal apparatus can cause, via relative locations of a buffer size field associated with remaining time information and a buffer size field not associated with remaining time information, the network apparatus to accurately understand a format of the BSR, so that the network apparatus can appropriately allocate a resource, to improve uplink resource utilization, avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

With reference to the tenth aspect, in some implementations of the tenth aspect, the remaining time is less than or equal to a first time threshold.

Based on the foregoing technical solution, urgent data may be further distinguished by configuring the remaining time in the BSR to be less than or equal to the first time threshold, for example, data with a remaining time less than or equal to the first time threshold is urgent data, so that an uplink transmission resource can be further accurately allocated based on an urgency degree of data.

With reference to the tenth aspect, in some implementations of the tenth aspect, the first BSR explicitly or implicitly indicates the remaining time.

According to an eleventh aspect, a communication method is provided. The method may be performed by a network apparatus, or may be performed by a component (for example, a chip or a circuit) of the network apparatus. This is not limited in this application. For ease of description, the following uses an example in which the network apparatus performs the method for description.

The communication method includes: The network apparatus receives a first BSR. The first BSR or a MAC subheader corresponding to the first BSR includes reference time information. The reference time information is used for determining a remaining time corresponding to data. A terminal apparatus sends the first BSR.

Based on the foregoing technical solution, configuring a BSR or a MAC subheader corresponding to the BSR to include reference time information causes a network apparatus to obtain actual remaining time information of data after the network apparatus receives the BSR, so that a base station can perform appropriate resource scheduling, to meet a delay requirement of the data of the terminal apparatus, thereby ensuring service reliability and service performance.

With reference to the eleventh aspect, in some implementations of the eleventh aspect, the reference time information indicates a time of generating remaining time information indicated by the first BSR, or indicates a time of generating the first BSR, or indicates a time of sending the first BSR.

With reference to the eleventh aspect, in some implementations of the eleventh aspect, that the network apparatus allocates a transmission resource based on the first BSR includes: The network apparatus obtains the actual remaining time based on the remaining time and reference time information in the first BSR; and allocates the transmission resource based on the first BSR.

According to a twelfth aspect, a communication method is provided. The method may be performed by a network apparatus, or may be performed by a component (for example, a chip or a circuit) of the network apparatus. This is not limited in this application. For ease of description, the following uses an example in which the network apparatus performs the method for description.

The communication method includes: The network apparatus receives a first BSR. The first BSR includes third indication information and fourth indication information. The third indication information indicates an arrival time or expiration time of first data. The fourth indication information indicates an offset of an arrival time of second data relative to the arrival time of the first data, or indicates an offset of an expiration time of the second data relative to the expiration time of the first data. A terminal apparatus sends the first BSR.

Based on the foregoing technical solution, the terminal apparatus does not need to report an arrival time (or expiration time) for each piece of data, and may indicate only an arrival time (or expiration time) of one piece of data. In this way, air interface resources can be saved.

With reference to the twelfth aspect, in some implementations of the twelfth aspect, the first data is data earliest received by an access stratum AS of the terminal apparatus.

According to a thirteenth aspect, a communication apparatus is provided. The communication apparatus includes: a transceiver, a processor, and a memory. The processor is configured to control the transceiver to receive or send a signal. The memory is configured to store a computer program. The processor is configured to invoke the computer program from the memory and run the computer program, to cause the communication apparatus to perform the method according to any one of the implementations of the first aspect to the twelfth aspect.

According to a fourteenth aspect, a communication apparatus is provided. The communication apparatus includes: a module configured to perform the method according to any one of the implementations of the first aspect to the seventh aspect, or a module configured to perform the method according to any one of the implementations of the eighth aspect to the twelfth aspect.

According to a fifteenth aspect, a computer-readable storage medium is provided. The computer-readable storage medium stores a computer program. When the computer program is run on a terminal apparatus, the terminal apparatus performs the method according to any one of the implementations of the first aspect to the seventh aspect. Alternatively, when the computer program is run on a network apparatus, the network apparatus performs the method according to any one of the implementations of the eighth aspect to the twelfth aspect.

According to a sixteenth aspect, a computer program product including instructions is provided. When the instructions are run on a computer, the method according to any one of the implementations of the first aspect to the twelfth aspect is performed.

According to a seventeenth aspect, a chip is provided. The chip includes at least one processor. The at least one processor is coupled to a memory. The memory is configured to store a computer program. The processor is configured to invoke the computer program from the memory and run the computer program, to cause a communication apparatus in which a chip system is installed to perform the method according to any one of the implementations of the first aspect to the twelfth aspect.

The chip may include an input circuit or interface for sending information or data and an output circuit or interface for receiving information or data.

According to an eighteenth aspect, this application provides a communication system, including a network apparatus and a terminal apparatus. The terminal apparatus is configured to perform the method according to any one of the implementations of the first aspect to the seventh aspect, and the network apparatus is configured to perform the method according to any one of the implementations of the eighth aspect to the twelfth aspect.

### BRIEF DESCRIPTION OF DRAWINGS

FIG. 1A is a diagram of a network architecture applicable to this application;
FIG. 1B is a diagram of another network architecture applicable to this application;
FIG. 2 is a diagram of GOP encoding according to an embodiment of this application;
FIG. 3A is a diagram of a format of a short BSR or a short truncated BSR according to an embodiment of this application;
FIG. 3B is a diagram of a format of a long BSR or a long truncated BSR according to an embodiment of this application;
FIG. 3C is a diagram of a format of an extended short BSR or an extended short truncated BSR according to an embodiment of this application;
FIG. 3D is a diagram of a format of an extended long BSR or an extended long truncated BSR according to an embodiment of this application;
FIG. 3E is a diagram of a format of an SL-BSR or a truncated SL-BSR according to an embodiment of this application;
FIG. 4 is a diagram of a BSR format according to an embodiment of this application;
FIG. 5 is a schematic flowchart of a communication method according to an embodiment of this application;
FIG. 6A is a diagram of another BSR format according to an embodiment of this application;
FIG. 6B is a diagram of another BSR format according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application;
FIG. 13 is a schematic flowchart of another communication method according to an embodiment of this application;
FIG. 14 is a diagram of a structure of a communication apparatus according to an embodiment of this application; and
FIG. 15 is a diagram of a chip system according to an embodiment of this application.

### DESCRIPTION OF EMBODIMENTS

For ease of understanding embodiments of this application, the following descriptions are provided.

First, unless otherwise stated or there is a logic conflict, terms and/or descriptions in different embodiments are consistent and may be mutually referenced, and technical features in different embodiments may be combined based on an internal logical relationship thereof, to form a new embodiment.

Second, "at least one" means one or more, and "a plurality of" means two or more (including two). "And/or" describes an association relationship between associated objects, and indicates that three relationships may exist. For example, A and/or B may indicate the following three cases: Only A exists, both A and B exist, and only B exists, where A and B may be in a singular form or a plural form. In text descriptions of this application, the character "/" usually indicates an "or" relationship between associated objects. "At least one of the following items (pieces)" or a similar expression means any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

Third, "first", "second", and various numbers (for example, #1 and #2) are merely for differentiation for ease of description, and are not used to limit the scope of embodiments of this application. For example, the terms are used to distinguish between different indication information.

Fourth, the terms "include", "have" and any other variants thereof are intended to cover non-exclusive inclusion. For example, a process, method, system, product, or device that includes a list of steps or units is not necessarily limited to those steps or units that are expressly listed, but may include other steps or units that are not expressly listed or inherent to such a process, method, product, or device.

Fifth, "indicating" may include direct indicating and indirect indicating, or "indicating" may be explicitly and/or implicitly indicating. For example, when a piece of information is described as indicating information I, the information may directly indicate I or indirectly indicate I, but it does not necessarily indicate that the information carries I. For another example, implicit indication may be based on a location and/or a resource used for transmission; and explicit indication may be based on one or more parameters, and/or one or more indexes, and/or one or more bit patterns represented by the explicit indication.

Indication manners in this application should be understood as covering various methods that can cause a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application. The sending periodicities and/or the sending occasions of these pieces of sub-information may be predefined, for example, predefined according to a protocol; or may be configured by sending configuration information by a transmit-end device to a receive-end device. For example, the configuration information may include, but is not limited to, one or a combination of at least two of radio resource control signaling, MAC layer signaling, and physical layer signaling. The radio resource control signaling includes, for example, RRC signaling. The MAC layer signaling includes, for example, a MAC control element (control element, CE). The physical layer signaling includes DCI signaling and the like.

The following describes technical solutions of this application with reference to accompanying drawings. The technical solutions in embodiments of this application may be applied to various communication systems, for example, a 5th generation (5th generation, 5G) system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), or another evolved communication system.

This application may be applied to an NG-RAN (Next Generation Radio Access Network, next generation radio access network) system, an LTE system, or a system like a 6G system or a 7G system that may appear in the future, or a CU-DU architecture. This is not limited in this application.

The technical solutions in embodiments of this application may be further applied to machine type communication (machine type communication, MTC), a long term evolution-machine (long term evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle-to-X (vehicle-to-X, V2X, where X can stand for everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

For ease of description, a 5G network architecture is used as an example for description in embodiments of this application.

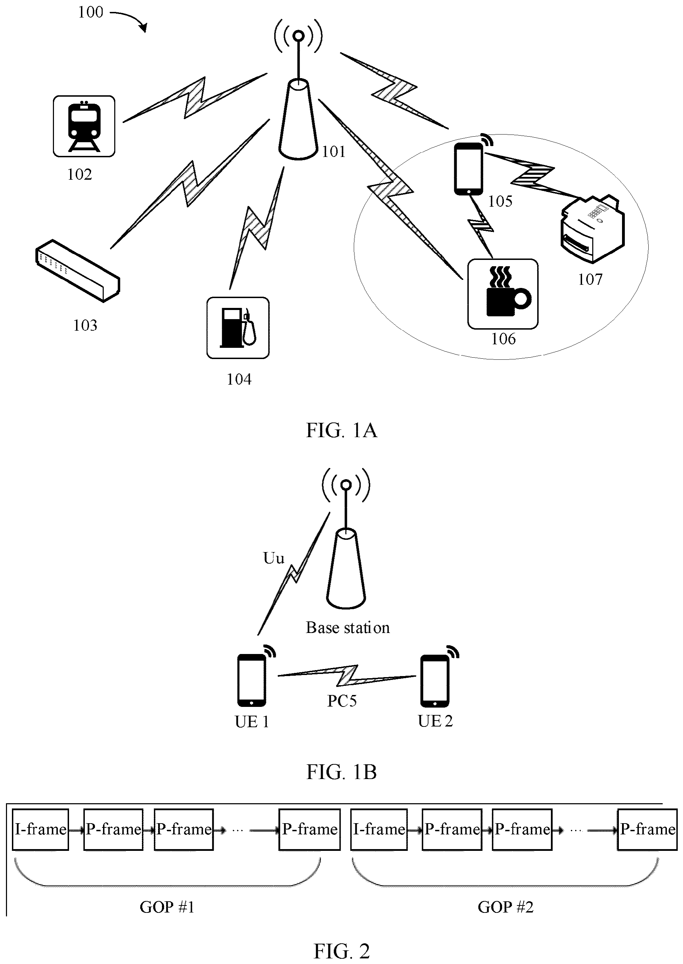

FIG. 1A is a diagram of a network architecture 100 applicable to this application. As shown in FIG. 1A, the communication system 100 may include at least one network apparatus, for example, a network apparatus 101. The communication system 100 may further include at least one terminal apparatus, for example, terminal apparatuses 102 to 107. The terminal apparatuses 102 to 107 may be mobile or fixed. The network apparatus 101 and one or more of the terminal apparatuses 102 to 107 may communicate via a radio link. That is, the network apparatus may send a signal to the terminal apparatus, and the terminal apparatus may also send a signal to the network apparatus. For example, each network apparatus may provide communication coverage for a specific geographical area, and may communicate with a terminal apparatus within the coverage. For example, the network apparatus may send configuration information to the terminal apparatus, and the terminal apparatus may send uplink data to the network apparatus based on the configuration information. For another example, the network apparatus may send downlink data to the terminal apparatus. Therefore, the network apparatus 101 and one or more of the terminal apparatuses 102 to 107 in FIG. 1 form a communication system.

In a possible implementation, the terminal apparatuses may directly communicate with each other. For example, direct communication between the terminal apparatuses may be implemented by using a D2D technology or the like. As shown in FIG. 1A, direct communication between the terminal apparatuses 105 and 106, and between the terminal apparatuses 105 and 107 may be performed by using the D2D technology. The terminal apparatus 106 and the terminal apparatus 107 may communicate with the terminal apparatus 105 separately or simultaneously.

In another possible implementation, the terminal apparatuses 105 to 107 may alternatively separately communicate with the network apparatus 101. For example, the terminal apparatuses may directly communicate with the network apparatus 101. To be specific, the terminal apparatus 105 and 106 may directly communicate with the network apparatus 101; or may indirectly communicate with the network apparatus 101, that is, the terminal apparatus 107 communicates with the network apparatus 101 via the terminal apparatus 105.

FIG. 1B is a diagram of another network architecture applicable to this application. As shown in FIG. 1B, the technical solutions of this application may be applied to an uplink transmission scenario. For example, UE 1 communicates with a base station via a Uu interface. UE 1 may report a buffer status of an uplink (Uplink, UL) to the base station via a UL BSR. Alternatively, the technical solutions of this application may be applied to a sidelink (Sidelink, SL) scenario. For example, UE 1 communicates with another UE (for example, UE 2) via a PC5 interface, and for SL communication, UE 1 may need an SL resource allocated by a base station. UE 1 may report an SL buffer status to the base station via an SL-BSR, so that the base station can schedule an SL resource for UE 1, to implement the SL communication of UE 1.

It should be understood that FIG. 1A and FIG. 1B separately show a network apparatus, at least one terminal apparatus, and communication links between communication devices. Optionally, the communication system may include one or more network apparatuses, and another quantity of terminal apparatuses, for example, more or fewer terminal apparatuses, may be included within a coverage range of each network apparatus. This is not limited in this application. The following separately describes some devices in the network architecture 100.

### 1. Terminal apparatus

In embodiments of this application, the terminal apparatus may also be referred to as user equipment (user equipment, UE), a terminal, an access terminal, a subscriber unit, a subscriber station, a mobile station, a remote station, a remote terminal, a mobile device, a user terminal, a terminal, a wireless communication device, a user agent, a user apparatus, or the like. The terminal apparatus in embodiments of this application may be a mobile phone, a tablet computer, a computer having a wireless transceiver function, an XR terminal, a virtual reality (virtual reality, VR) terminal, an augmented reality (augmented reality, AR) terminal, a mixed reality (mixed reality, MR) terminal, a wireless terminal in industrial control, a wireless terminal in self driving, a wireless terminal in telemedicine, a wireless terminal in a smart grid, a wireless terminal in transportation safety, a wireless terminal in a smart city, a wireless terminal in a smart home, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

It should be understood that a specific technology and a specific device form used by the terminal apparatus are not specifically limited in this application.

It should be noted that the terminal apparatus and the network apparatus (for example, an access network device) may communicate with each other by using an air interface technology (for example, an NR technology or an LTE technology).

### 2. Network apparatus

In embodiments of this application, the network apparatus may be an apparatus that is deployed in a radio access network and that provides a wireless communication function for the terminal apparatus, and may be a device configured to communicate with the terminal apparatus or a chip of the device. The network apparatus includes but is not limited to: a radio network controller (radio network controller, RNC), a base station controller (base station controller, BSC), a home base station (for example, home evolved NodeB, or home NodeB, HNB), a baseband unit (baseband unit, BBU), an access point (access point, AP) in a wireless fidelity system, a radio relay node, a radio backhaul node, a transmission point (transmission point, TP), or a transmission and reception point (transmission and reception point, TRP), or may be a gNB or a transmission point (TRP or TP) in a 5G (for example, NR) system, or an antenna panel or a group of antenna panels (including a plurality of antenna panels) of a base station in the 5G system. Alternatively, the network apparatus may be a network node that forms the gNB or the transmission point, for example, the baseband unit BBU or a distributed unit (distributed unit, DU), or the like.

For example, the network apparatus may be a network device (for example, a base station), or may be a terminal device (for example, UE 2). In other words, the technical solutions of this application are applicable to a cellular uplink transmission scenario, and are also applicable to a sidelink SL scenario. It should be noted that, in the SL scenario, to communicate with another terminal apparatus, the terminal apparatus may report an SL-BSR to the network apparatus, so that the network apparatus schedules an SL resource for the terminal apparatus.

It should be understood that all or some functions of the network apparatus in embodiments of this application may be implemented through a software function running on hardware, or may be implemented through an instantiated virtualization function on a platform (for example, a cloud platform).

In some network deployments, the network apparatus may use a CU-DU separated architecture, that is, include a central unit (central unit, CU) and a DU. The network apparatus may further include an active antenna unit (active antenna unit, AAU). The CU implements a part of functions of the network apparatus. For example, the CU is responsible for processing non-real-time protocols and services, and implements functions of a radio resource control (radio resource control, RRC) layer and a packet data convergence protocol (packet data convergence protocol, PDCP) layer. The DU implements a part of functions of the network apparatus. For example, the DU is responsible for processing physical layer protocols and real-time services, and implements functions of a radio link control (radio link control, RLC) layer, a medium access control (Medium Access Control, MAC) layer, and a physical (physical, PHY) layer. The AAU implements a part of physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in the architecture, higher-layer signaling (for example, RRC layer signaling) may alternatively be considered to be sent by the DU, or sent by the DU and the AAU. It may be understood that the network apparatus may be a CU node, a DU node, a device including a CU node and a DU node, or a device including a control plane CU node (CU-CP node), a user plane CU node (CU-UP node), and a DU node.

It should be understood that a specific technology and a specific device form used by the network apparatus are not specifically limited in this application.

The network apparatus and the terminal apparatus may be deployed on land, for example, an indoor or outdoor apparatus, a handheld apparatus, or a vehicle-mounted apparatus; may be deployed on water; or may be deployed on an airplane, a balloon, and a satellite in air. A scenario in which the network apparatus and the terminal apparatus are used is not limited in embodiments of this application.

It should be understood that FIG. 1A and FIG. 1B are merely simplified diagrams for ease of understanding. The communication system 100 may further include another network apparatus, or may further include another terminal apparatus or another apparatus that is not shown in FIG. 1A and FIG. 1B.

For example, the network apparatus may include an access network device and/or a core network device. For example, the access network device may provide a wireless access connection for the terminal apparatus, and may send data to the terminal apparatus or receive data sent by the terminal apparatus. In addition, the access network device is also connected to the core network device, and the access network device may forward the data received from the terminal apparatus to a core network, or receive, from the core network, data that needs to be sent to the terminal apparatus.

To facilitate understanding of embodiments of this application, terms in this application are briefly described.

### 1. Extended reality XR

For example, XR may be a term for different types of reality. For example, XR may refer to all real-virtual combined environments and human-computer interaction generated by computer technologies and wearable devices. An XR service may include, but is not limited to, the following representative forms and fields in which the representative forms are applied: augmented reality (augmented reality, AR), mixed reality (mixed reality, MR), and virtual reality (virtual reality, VR).

For example, XR may include cloud gaming (CG, Cloud Gaming).

To improve experience of people during interaction with a virtual world, the XR service has strict bandwidth and delay requirements. For example, during uplink transmission, an XR terminal may capture a picture of a current scene through a built-in camera and continuously upload the picture of the current scene to a server at a specific frequency (for example, 60 Hz or 120 Hz). During downlink transmission, an encoder of the server generates data content at a fixed frequency (for example, 60 Hz or 120 Hz), and transmits the data content to the XR terminal via a core network and a RAN.

For example, the XR service may include a periodic service. A periodicity of the XR service may not be an integer. The periodicity of the XR service is calculated based on a frame rate (frame rate) X, and the frame rate may also be referred to as a frame generation rate. A unit of the frame rate X is a quantity of frames transmitted per second (frames per second, fps). The periodicity of the XR service is a reciprocal of the frame rate X. Typical values of the frame rate X include 30 fps, 60 fps, 90 fps, and 120 fps.

For example, a relationship between the periodicity of the XR service and the frame rate X may be as follows:
(1) For 30 fps, the periodicity of the XR service is (1/30 fps) seconds (s)=(1/30 fps)*1000 ms=1000/30 milliseconds (ms)=100/3 ms≈33.3333 ms.
(2) For 60 fps, the periodicity of the XR service is (1/60 fps) s=(1/60 fps)*1000 ms=1000/60 ms=50/3 ms≈16.6667 ms.
(3) For 90 fps, the periodicity of the XR service is (1/90 fps) s=(1/90 fps)*1000 ms=1000/90 ms=100/9 ms≈11.1111 ms.
(4) For 120 fps, the periodicity of the XR service is (1/120 fps) s=(1/120 fps)*1000 ms=1000/120 ms=25/3 ms≈8.3333 ms.

For example, generally, the XR service periodically generates data frames at a frame rate. Due to encoding characteristics of XR video data, such as intra-frame and inter-frame encoding and randomness of video content changes, sizes of XR data frames usually vary significantly. For example, sizes of two adjacent XR data frames may be different, and may be significantly different. In addition, variations of the sizes of the XR data frames also exhibit randomness, comply with a specific distribution, but are nearly impossible to predict precisely. For example, a service model of a downlink XR service includes the AR/VR and the cloud gaming. For the AR/VR, a frame rate may be 60 fps or 120 fps, that is, 60 or 120 frames of video pictures are generated per second, one video frame appears every 16.67 ms or 8.33 ms, and a transmission rate is 20 Mbit/s or 45 Mbit/s; and an air interface transmission delay budget of a complete video frame is 10 ms. For the CG, a frame rate may be 60 fps or 120 fps, that is, 60 or 120 frames of video pictures are generated per second, and a transmission rate is 8 Mbit/s or 30 Mbit/s, or the like; and an air interface transmission delay budget of a complete video frame is 15 ms.

For example, duration from a moment at which a base station receives data of a picture frame via a user plane function (User Plane Function, UPF) to a moment at which the base station successfully sends the picture frame to UE may be referred to as an air interface transmission delay budget of a video frame.

In this embodiment of this application, XR data may be data related to an XR service.

A transmission delay requirement of the XR data/service is high. For example, a delay requirement of uplink XR data may be 30 ms.

For example, for an XR video service, a picture may be encoded in a group of pictures (group of pictures, GOP) encoding scheme and/or a slice (slice) encoding scheme. For example, in the slice encoding scheme, one video frame may include one I-slice and one or more P-slices.

FIG. 2 is a diagram of a structure of a GOP according to an embodiment of this application.

For example, in the GOP encoding scheme, one GOP may include one I-frame, or one GOP includes one I-frame and one or more P-frames. For example, as shown in FIG. 2, one GOP (for example, GOP #1 or GOP #2) includes one I-frame and a plurality of P-frames.

Optionally, the GOP may further include a B-frame.

For example, the I-frame is an internal coded frame (which may also be referred to as an intra coded frame, a key frame, an important frame, or the like), and the I-frame is a reference frame for the P-frame and/or the B-frame, and has a characteristic of being encoded and decoded independently. For example, the P-frame is a forward-predictive frame (which may also be referred to as a forward-predicted coded frame, a forward reference frame, a dependent frame, a non-key frame, or the like). During decoding of the P-frame, a previous closest I-frame or P-frame needs to be referenced, and the P-frame may be a reference frame for a subsequent P-frame and/or B-frame. For example, the B-frame is a bi-directional interpolated prediction coded frame (bi-directional interpolated prediction frame), and may also be referred to as a dependent frame, a non-key frame, or the like. During decoding of the B-frame, a previous closest I-frame or P-frame and a subsequent closest P-frame need to be referenced. For example, the I-frame is a complete picture, and the P-frame records a change relative to the I-frame. If there is no I-frame, the P-frame cannot be decoded. Therefore, a transmission priority of the I-frame needs to be higher than that of the P-frame. If an I-frame fails to be transmitted (for example, the I-frame fails to be transmitted when a delay requirement of the I-frame is met) during transmission, even if a subsequent video frame (for example, a P-frame) that depends on the I-frame is successfully transmitted, a receive side still cannot implement correct decoding.

### 2. Buffer status report (buffer status report or buffer status reporting, BSR)

For example, the BSR may include a UL BSR and/or an SL-BSR.

For example, the UL BSR may include/be replaced with: a Uu BSR or a BSR.

### 2.1 UL BSR

A terminal apparatus may provide, through a UL BSR process (or a BSR process), a network apparatus with information about an uplink data volume in a MAC entity.

For example, the BSR is a MAC CE, and therefore may also be referred to as a BSR MAC CE.

For example, when a specific trigger condition is met, the terminal apparatus sends a BSR to the network apparatus, to indicate a buffer status of an uplink of the terminal apparatus to the network apparatus. After receiving the BSR, the network apparatus may allocate an uplink resource to the terminal apparatus based on the BSR reported by the terminal apparatus, so that the terminal apparatus may perform uplink transmission.

Optionally, a BSR MAC CE format may include one or more of the following: a short BSR format (short BSR format), an extended short BSR format (extended short BSR format), a long BSR format (long BSR format), an extended long BSR format (extended long BSR format), a short truncated BSR format (short truncated BSR format), an extended short truncated BSR format (extended short truncated BSR format), a long truncated BSR format (long truncated BSR format), or an extended long truncated BSR format (extended long truncated BSR format). For example, a short BSR, an extended short BSR, a short truncated BSR, and an extended short truncated BSR have fixed sizes (fixed sizes). For example, a long BSR, an extended long BSR, a long truncated BSR, and an extended long truncated BSR have variable sizes (variable sizes).

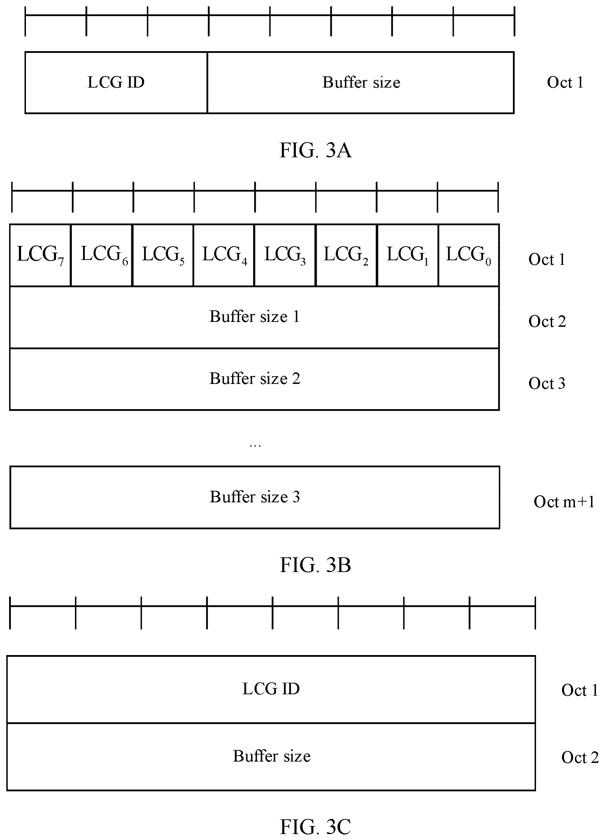

For example, FIG. 3A shows a format of the short BSR or the short truncated BSR. For example, in the BSR format in this application, "LCG ID" represents an LCG ID field, "buffer size" represents a buffer size field, and "Oct" represents one byte.

For example, FIG. 3B shows a format of the long BSR or the long truncated BSR. For example, in the BSR format in this application, "LCGᵢ" represents an LCGᵢ field.

For example, FIG. 3C shows a format of the extended short BSR or the extended short truncated BSR.

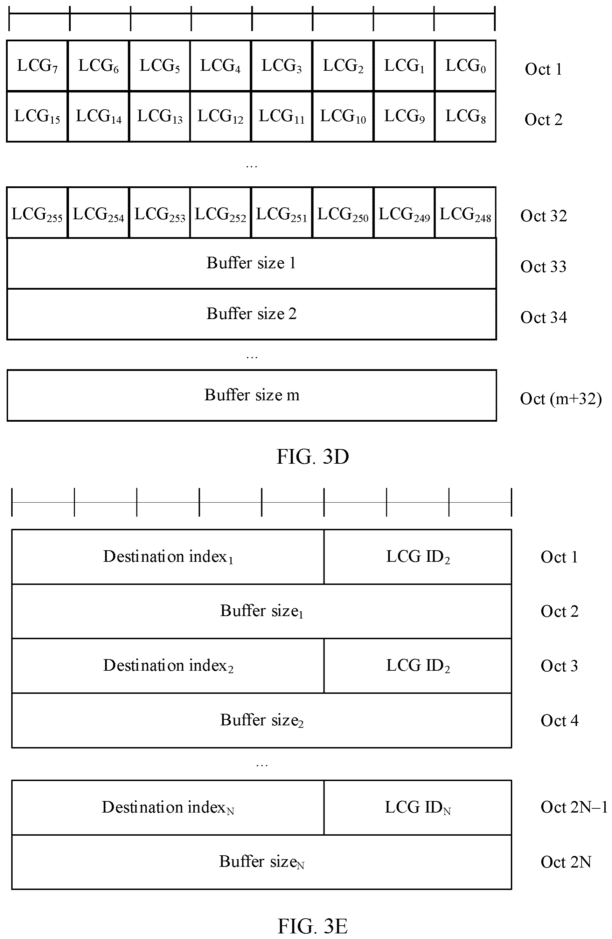

For example, FIG. 3D shows a format of the extended long BSR or the extended long truncated BSR.

For example, the BSR format is identified by an LCID in a MAC PDU subheader or a MAC subheader.

For example, fields in the BSR MAC CE are defined as follows:
(1) An LCG ID field, or referred to as an LCG ID for short, identifies a logical channel group whose buffer status is being reported.

For example, the buffer status may include/be replaced with: a buffer size, or a buffer size, or a BS.

For example, for the short BSR and the short truncated BSR, a length of the field is 3 bits (bits); and for the extended short BSR and the extended short truncated BSR, the length of this field is 8 bits.

(2) An LCGᵢ field is referred to as an LCGᵢ for short.

For the long BSR and the extended long BSR, the LCGᵢ field indicates whether a buffer size field is present for logical channel group i. Details are as follows (for example):
a. The LCGᵢ field set to "1" indicates that the buffer size field for logical channel group i is reported.
b. The LCGᵢ field set to "0" indicates that the buffer size field for logical channel group i is not reported.

For the long truncated BSR and the extended long truncated BSR, the LCGᵢ field indicates whether logical channel group i has data available. Details are as follows:
a. The LCGᵢ field set to "1" indicates that logical channel group i has data available.
b. The LCGᵢ field set to "0" indicates that logical channel group i has no data available.

(3) A buffer size field, or referred to as a buffer size field, or referred to as a buffer size or a BS or a buffer size for short, indicates a buffer size corresponding to a logical channel group. For example, the field identifies a total amount of data available according to a data volume calculation process in the 3rd generation partnership project (3rd generation partnership project, 3GPP) technical specification (technical specification, TS) 38.322 and TS 38.323 across all logical channels of an LCG after a MAC protocol data unit (protocol data unit, PDU) has been built.

For example, a data volume of the buffer size field is indicated with a quantity of bytes (Oct). For example, sizes of an RLC header and the MAC subheader are not considered in buffer size calculation.

For example, for the short BSR and the short truncated BSR, the length of the buffer size field is 5 bits (bits). For the extended short BSR and the extended short truncated BSR, the length of this field is 8 bits. For example, for the long BSR, the long truncated BSR, the extended long BSR, and the extended long truncated BSR, the length of this field is 8 bits.

For example, for the long BSR, the long truncated BSR, the extended long BSR, and the extended long truncated BSR, in terms of an arrangement order of buffer size fields, the buffer size fields are included in ascending order based on the LCGᵢ.

For example, the arrangement order may include/be replaced with a placement order.

For example, as shown in FIG. 3B, if LCG₁, LCG₃, and LCG₇ fields are all set to "1", and LCG₀, LCG₂, LCG₄, LCG₅, and LCG₆ fields are all set to "0", it indicates that buffer sizes for LCG₁, LCG₃, and LCG₇ are all reported, and buffer sizes for other logical channel groups are not reported, that is, m is equal to "3". Therefore, there are three buffer size fields below: buffer size 1, buffer size 2, buffer size 3. Buffer size 1 may indicate a buffer size of LCG₁, buffer size 2 may indicate a buffer of LCG₃, and buffer size 3 may indicate a buffer size of LCG₇.

For example, for the long truncated BSR and the extended long truncated BSR, a quantity of buffer size fields may be maximized, but does not exceed a quantity of padding bits (padding bits).

For example, if the uplink resource cannot accommodate a BSR (or a complete BSR, or a padding BSR), the terminal apparatus may report a truncated BSR (for example, a short truncated BSR, a long truncated BSR, an extended short truncated BSR, or an extended long truncated BSR).

### 2.1.1 Triggering of the UL BSR

In terms of the UL BSR, for an activated cell group (cell group), UE needs to trigger the BSR when at least one of event 1, event 2, event 3, or event 4 occurs or when at least one of condition 1, condition 2, condition 3, or condition 4 is met:

Event 1 (or condition 1): A MAC entity of the UE has new UL data on a logical channel belonging to an LCG, and at least one of the following conditions is met:
a. A priority of the logical channel on which the new UL data is located is higher than a priority of any logical channel that includes available UL data and that is in any LCG;
b. No UL data is available on any other logical channel in the LCG.

In this event 1 (or condition 1), the triggered BSR is referred to as a regular (regular) BSR, or a regular UL BSR, to differentiate from a regular SL-BSR.

Event 2 (or condition 2): A network device allocates a UL resource, and a quantity of padding bits is greater than or equal to a size of a BSR MAC CE plus a MAC subheader of the BSR MAC CE. In this case, the BSR is referred to as a padding (padding) BSR, or referred to as a padding UL BSR, to differentiate from a padding SL-BSR.

Event 3 (or condition 3): A BSR retransmission timer (retxBSR-Timer) expires, and at least one logical channel in an LCG includes UL data. In this case, the triggered BSR is referred to as a regular BSR.

Event 4 (or condition 4): A periodic (periodic) BSR timer (periodicBSR-Timer) expires. In this case, the triggered BSR is referred to as a periodic (periodic) BSR, or referred to as a periodic UL-BSR, to differentiate from a periodic SL-BSR.

For example, when none of the foregoing event 1 (or condition 1) to event 3 (or condition 3) is met, a base station may alternatively learn of a buffer status of the UE via the periodic BSR, so that the base station may allocate an appropriate uplink resource to the UE.

### 2.2 Sidelink buffer status report (sidelink buffer status reporting/sidelink buffer status report, SL-BSR)

For example, the SL-BSR is a MAC CE, and therefore may also be referred to as an SL-BSR MAC CE.

For example, an SL-BSR MAC CE format may include any one or more of the following: an SL-BSR and a truncated SL-BSR.

For example, FIG. 3E shows a format of the SL-BSR or the truncated SL-BSR. For example, in the BSR format in this application, "destination index" represents a destination index (destination index) field.

For example, an SL-BSR format is identified by an LCID in a MAC PDU subheader or a MAC subheader.

For example, fields in the SL-BSR MAC CE are defined as follows:
(1) The destination index field identifies a destination (destination), and a length of this field is 5 bits.
(2) An LCG ID field identifies a logical channel group (or a sidelink logical channel) whose buffer status is being reported, and a length of this field is 3 bits.
(3) A buffer size field, or referred to as a buffer size field, or referred to as a buffer size or a BS or a buffer size for short, indicates a buffer size corresponding to a logical channel group of a destination. For example, the field identifies a total amount of data available according to a data volume calculation process in 3GPP TS 38.322 and TS 38.323 across all logical channels of an LCG of a destination after a MAC PDU has been built.

For example, a data volume of the buffer size field is indicated with a quantity of bytes (Oct). For example, sizes of an RLC header and the MAC subheader are not considered in buffer size calculation.

For example, a length of the buffer size field is 8 bits.

For example, for the truncated SL-BSR, a quantity of buffer size fields may be maximized, but does not exceed a quantity of padding bits (padding bits).

For example, for an arrangement order of buffer size fields in the SL-BSR MAC CE, the buffer size fields in LCGs are included in descending order of a highest priority of an SL LCH that has transmittable data in each LCG, regardless of values of destination index fields.

For example, if the uplink resource cannot accommodate an SL-BSR (or a complete SL-BSR), the terminal apparatus may report a truncated SL-BSR.

It should be noted that in this application, the term "BSR" is used as an example for description, but is not intended for limitation. For example, "BSR" may be replaced with "MAC CE" or another term.

In this application, "based on" or "according to" may include/be replaced with: in consideration of.

It should be noted that in this application, the term "BSR" is used as an example for description, but is not intended for limitation. For example, "BSR" may be replaced with "MAC CE" or another term.

In this application, configuration and/or preconfiguration may be used. For example, the configuration may mean that a network device sends configuration information of some parameters or values of the parameters to a terminal device in a message or signaling. For example, the terminal device may determine, based on the values or the information, communication parameters or a resource used during transmission. For example, the preconfiguration may mean that the network device pre-negotiates parameter information or a parameter value with the terminal device in signaling or a message, parameter information or a parameter value used by the network device and/or the terminal device is specified in a standard protocol, or parameter information or a parameter value is pre-stored in the network device or the terminal device. This is not limited in this application.

In this application, for example, a first BSR may include/be replaced with/understood as a first BSR MAC CE.

In this application, for example, a second BSR may include/be replaced with/understood as a second BSR MAC CE.

In this application, for example, a remaining time corresponding to data may include/be replaced with/understood as a remaining time corresponding to a buffer status.

In this application, for example, data with a minimum remaining time may include/be replaced with/understood as a buffer status of a data with a minimum remaining time, or a buffer status associated with the minimum remaining time.

In this application, a concept, a name, a calculation process, an obtaining process, and the like of the remaining time are not limited. For example, the remaining time may include any one or more of the following: a remaining delay, a remaining PDB (packet delay budget, packet delay budget), a remaining PSDB (PDU set delay budget, PDU set delay budget), a time/duration to an expiration time, a time/duration to discarding, or a time/duration to expiration of a discard timer. For example, an expiration time may alternatively be a deadline.

In this application, a granularity of buffer status reporting is not limited. For example, the granularity of buffer status reporting may be any one or more of the following: per (per) data burst (data burst), per PDU set (PDU set), per remaining time (or per remaining time range), per LCH, per LCG, per LCH and per data burst, per LCH and per PDU set, per LCH and per remaining time (or per LCH and per remaining time range), per LCG and per data burst, per LCG and per PDU set, or per LCG and per remaining time (or per LCG and per remaining time range).

It should be noted that, in this application, "data" does not necessarily refer to one piece of data, and may include one or more pieces of data. For example, the data may be one or more data bursts, or one or more PDU sets, or data corresponding to a remaining time (or a remaining time range), or one or more data bursts in an LCH or an LCG, or one or more PDU sets in an LCH or an LCG, or data corresponding to a remaining time (or a remaining time range) in an LCH or an LCG.

In this application, for example, a remaining time corresponding to data may include/be replaced with: a minimum, a maximum, or an average remaining time of remaining times corresponding to data, or remaining time information corresponding to data, or a minimum, a maximum, or an average remaining time corresponding to/indicated by remaining time information corresponding to data, or a minimum, a maximum, or an average remaining time corresponding to/indicated by remaining time information corresponding to data.

It should be noted that, in methods of this application, a UL (or a UL BSR) is used as an example for description. The methods in this application may be alternatively applied to an SL (or an SL-BSR). For example, in this application, data is understood as SL data, a BSR is understood as an SL-BSR, an LCH is understood as an SL LCH, and an LCG is understood as an SL LCG.

It should be noted that, in the methods of this application, a terminal apparatus and/or a network apparatus are/is used as an example for description. The methods in this application may be alternatively applied to another apparatus. For example, the terminal apparatus in this application is understood as a first apparatus, and the network apparatus is understood as a second apparatus.

For example, to-be-transmitted data may be classified into urgent data and non-urgent data. The to-be-transmitted data may be understood as data for which the terminal apparatus expects the network apparatus to allocate a transmission resource. The urgent data may be data whose remaining time (remaining time) is relatively short, or may be understood as data for which the network apparatus is expected to allocate a transmission resource as soon as possible. The non-urgent data may be data of a service (for example, a non-XR service) that has a low or no requirement on a delay or data whose remaining time is relatively long. An existing BSR cannot notify the network apparatus of urgency degrees of different data (for example, the different data may be different data of a same service, or may be different data of different services) in the to-be-transmitted data. Therefore, when the network apparatus allocates an uplink transmission resource, if the allocated resource is inappropriate, a transmission delay, a transmission failure, or another problem may occur on data of some services, or a resource waste may be caused.

For an XR service, a data transmission delay is relatively short. To cause the network apparatus to allocate a resource more appropriately (for example, to avoid a resource waste) and/or improve data transmission reliability (for example, to ensure that data of the terminal apparatus can be transmitted in accordance with a delay requirement), so as to increase a system capacity, the terminal apparatus may not only need to report a buffer status, but also need to report remaining time information corresponding to the buffer status (for example, explicitly or implicitly).

For example, for the foregoing problem, the remaining time information may be included in the BSR. By way of example and not limitation, that there is no remaining time information for some data may indicate that the data is non-urgent data; and that there is remaining time information for some data and a remaining time is very short may indicate that the data is urgent data, and the network apparatus may allocate a transmission resource for the urgent data preferentially during resource scheduling.

In embodiments of this application, a concept, a name, a calculation process, an obtaining process, and the like of the remaining time are not limited. For example, the remaining time may include any one or more of the following: a remaining delay, a remaining packet delay budget (packet delay budget, PDB), a remaining PDU set delay budget (PDU set delay budget, PSDB), a time/duration to an expiration time, a time/duration to discarding, or a time/duration to expiration of a discard timer. For example, an expiration time may alternatively be a deadline. For example, the expiration time may be understood as a time at which data becomes invalid, or may be understood as a time at which an access stratum (Access Stratum, AS) of the terminal apparatus starts to calculate a remaining time corresponding to the data after obtaining the data, or may be understood as a time at which the remaining time corresponding to the data is determined.

For reporting of a data volume of the XR service, there may be the following possibilities:
Possibility 1: A BS of the XR service is an independent MAC CE, that is, is not mixed with a BS of another service in one MAC CE. For example, a BS of XR data and a BS of non-XR data are not supported to be included in a same MAC CE (for example, a BSR MAC CE) (or the BS of the XR service is an independent MAC CE (for example, an XR BSR MAC CE), or a BS corresponding to XR data and a BS corresponding to non-XR data are not included in one MAC CE (for example, a BSR MAC CE)).

Possibility 2: A BS of the XR service and a BS of another service are mixed in one MAC CE. For example, a BS of XR data and a BS of non-XR data are included in a same MAC CE (for example, a BSR MAC CE); or the BS of the XR service is a non-independent MAC CE (for example, a non-XR-specific BSR MAC CE); or a BS corresponding to XR data and a BS corresponding to non-XR data may be included in one MAC CE (for example, a BSR MAC CE).

For example, the another service may be a service that has a low delay requirement for data transmission, for example, a non-XR service, an enhanced mobile broadband (Enhanced Mobile Broadband, eMBB) service, or an ultra reliable low latency communication (Ultra Reliable Low Latency Communication, URLLC) service.

For example, in an XR service, in the following two possible cases, one BSR MAC CE may include two types of buffer statuses (for example, a buffer status associated with remaining time information and a buffer status not associated with remaining time information):
Case 1: For possibility 1, for a part of XR data, the buffer status is associated with remaining time information; and for another part of XR data, the buffer status is not associated with remaining time information.

For example, for XR data with a relatively short remaining time, the buffer status is associated with remaining time information; and for XR data with a relatively long remaining time, the buffer status is not associated with remaining time information.

For example, different data of the XR service may correspond to different remaining times. For data with a critical-time requirement or a relatively short remaining time, remaining time information may be reported to the network apparatus. However, for data with a non-critical-time requirement or a relatively long remaining time, remaining time information may not be reported to the network apparatus.

For example, it seems unnecessary to report remaining time information for all data of the XR service, because if the remaining time is relatively long, it indicates that the data is not urgent, and the network apparatus does not need to be specially notified of specific remaining time information. Therefore, the remaining time information may be reported only for data that is time-critical or data with a relatively short remaining time, and the remaining time information is not reported for data that is not urgent.

Case 2: For possibility 2, for a part of data, the buffer status is associated with remaining time information; and for another part of data, the buffer status is not associated with remaining time information.

For example, for XR data, the buffer status is associated with remaining time information; for non-XR data, the buffer status is not associated with remaining time information.

For example, for another service, remaining time information does not need to be reported. For an XR service, remaining time information may be reported for all XR data, or optionally, the remaining time information may be reported for only a part of the XR data.

If one BSR MAC CE includes two types of buffer statuses, currently, there is no effective method for enabling the network apparatus to correctly interpret a meaning corresponding to each bit in a BSR. If the network apparatus cannot correctly interpret the meaning corresponding to each bit in the BSR, as a result, the network apparatus may incorrectly understand a buffer status of the terminal apparatus, and therefore cannot allocate an appropriate resource. Consequently, a resource waste may be caused and/or data transmission reliability may be reduced (for example, it cannot be ensured that data of the terminal apparatus is transmitted in accordance with a delay requirement). This results in a negative impact on a system capacity, and/or service transmission reliability and/or service transmission quality.

In view of this, this application provides a communication method, in which a terminal apparatus can simultaneously indicate, to a network apparatus via one BSR, a buffer status associated with remaining time information and a buffer status not associated with remaining time information, and cause, based on first indication information in the BSR, the network apparatus to correctly interpret a meaning corresponding to each bit in the BSR, so that the network apparatus can correctly understand a buffer status of the terminal apparatus, and the network apparatus can appropriately allocate a resource, to improve uplink resource utilization, and avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

The following describes in detail a communication method provided in embodiments of this application with reference to the accompanying drawings.

For example, this application may be applied to a service that requires low latency and high reliability, for example, an XR service. Optionally, this application may alternatively be applied to another service that does not have such a high delay requirement and reliability requirement. For example, a user-perceived throughput and user experience can be improved.

For ease of understanding, interaction between a network apparatus and a terminal apparatus is used as an example to describe in detail the communication method provided in embodiments of this application.

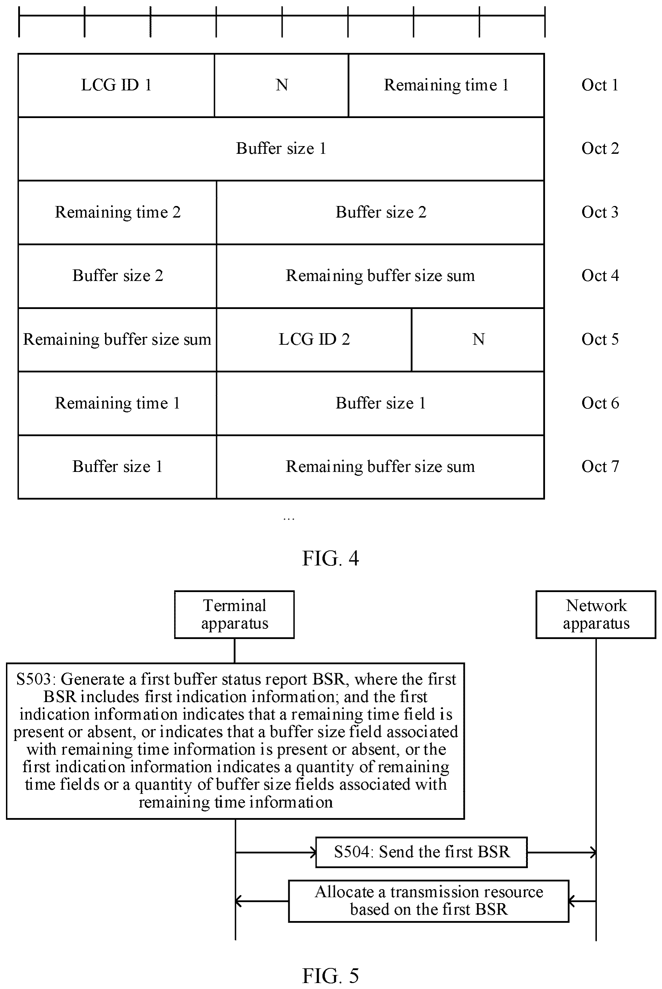

FIG. 4 shows a BSR (or BSR MAC CE) format according to an embodiment of this application.

As shown in FIG. 4, the BSR MAC CE includes an LCG ID field, a field N, a remaining time field, a buffer size field, and a remaining buffer size sum field. The following explains meanings of the fields.
1. The LCG ID field is a logical channel group ID field. The LCG ID field may identify a logical channel group whose buffer status is being reported. For example, a length of this field may be 3 bits, 8 bits, or another value. This is not limited in this application.
   Optionally, the LCG ID field may alternatively be replaced with a logical channel LCH ID field or an LCH index field. For example, the LCH ID field or the LCH index field may identify a logical channel whose buffer status is being reported. For example, the length of this field may be 6 bits, 8 bits, 16 bits, or another value. This is not limited in this application.
2. The field N is associated with the LCG field. For example, for content related to the field N, reference may be made to descriptions of the first indication information. Details are not described herein again.
3. The buffer size field may be referred to as a buffer size field, or referred to as a buffer size, a BS, or a buffer size for short. The field indicates buffer sizes that are in logical channel groups or logical channels and that are associated with remaining time information, or indicates a buffer size that is in a logical channel group or a logical channel and that is associated with a piece of remaining time information. For example, the buffer size field identifies a total amount of data available, associated with a piece of remaining time information, for a logical channel or across all logical channels in a logical channel group after a MAC protocol data unit (Protocol Data Unit, PDU) has been built (or after a logical channel prioritization (Logical Channel Prioritization, LCP) process). Optionally, this may cause a value of the buffer size field to be zero.
4. The remaining time field may be referred to as a remaining time field, and may indicate remaining time information.
   Optionally, remaining time information can be explicitly indicated if this field is present, and a remaining time can be implicitly indicated if this field is absent. For example, if this field is absent, a remaining time corresponding to each buffer size field may be specified in advance.
5. The remaining buffer size sum field may be referred to as a remaining buffer size sum field, and indicates a buffer size, for example, indicates buffer sizes that are in logical channel groups or logical channels and that are not associated with remaining time information, or indicates a buffer size that is in a logical channel group or a logical channel and that is not associated with remaining time information. For example, the remaining buffer size sum field identifies a total amount of data available, not associated with remaining time information, for a logical channel or across all logical channels in a logical channel group after a MAC protocol data unit (Protocol Data Unit, PDU) has been built (or after a logical channel prioritization (Logical Channel Prioritization, LCP) process). Optionally, this may cause a value of the remaining buffer size sum field to be zero.

Optionally, for the remaining buffer size sum field, the BSR may also include indication information or a field (for example, fifth indication information) indicating whether this field is present or absent.

The following describes a meaning represented by the BSR MAC CE as a whole in FIG. 4 as an example.

By way of example and not limitation, for LCG ID 1, if a value of the field N is 2, it may indicate that two buffer size fields, or two remaining time fields, or two pairs of buffer size fields and remaining time fields are present for LCG ID 1. After obtaining the BSR, the network apparatus may learn, based on a case that the value of the field N for LCG ID 1 is 2, that two pairs of buffer size fields and remaining time fields are present after the field N, and therefore may correctly interpret corresponding bits based on this format. The two pairs of buffer size fields and remaining time fields are followed by a remaining buffer size sum field for LCG ID 1, and the network apparatus may still correctly interpret a corresponding bit based on this format. Then, the network apparatus may continue to interpret subsequent bits based on similar logic.

FIG. 5 shows a communication method according to an embodiment of this application. The method includes the following steps.

Optionally, S501: A terminal apparatus triggers a second BSR.

For example, the second BSR may be a UL BSR. For example, the second BSR is used for providing information about an uplink data volume for a network apparatus.

For example, the second BSR may include a buffer status of XR data.

Optionally, the second BSR may not include a buffer status of non-XR data. For example, the second BSR may include only the buffer status of the XR data. For example, the second BSR is an XR BSR. For example, the XR BSR may include/be replaced with an XR-specific BSR. For example, the second BSR/XR BSR is used for providing the network apparatus with information about a data volume of uplink XR data. For example, the second BSR/XR BSR is associated with (or only associated with) an LCH/LCG related to an XR service; or the second BSR/XR BSR includes only a buffer status of data in an LCH/LCG related to an XR service.

For example, the XR data may include/be replaced with data in an LCH/LCG related to an XR service.

For example, the non-XR data may include/be replaced with: data other than XR data; or data in an LCH/LCG related to a non-XR service; or data (for example, UL data) other than data in an LCH/LCG related to an XR service; or data in an LCH/LCG (for example, UL LCH/UL LCG) other than an LCH/LCG related to an XR service.

Optionally, the second BSR may further include a buffer status of non-XR data. For example, the second BSR may include a buffer status of XR data and a buffer status of non-XR data. For example, the second BSR is a UL BSR.

For example, the second BSR may be a complete BSR, or the second BSR is not a truncated BSR. Optionally, the complete BSR means that the BSR includes buffer statuses that all need to be reported, or includes buffer statuses that are related to the BSR and that all need to be reported.

Optionally, the second BSR may be a padding BSR (for example, a padding UL BSR), a regular BSR (for example, a regular UL BSR), a periodic BSR (for example, a periodic UL BSR), or a BSR of another type.

Optionally, the terminal apparatus triggers the second BSR when at least one of event 1, event 2, event 3, or event 4 occurs or at least one of condition 1, condition 2, condition 3, or condition 4 is met.

Optionally, the terminal apparatus triggers the second BSR when at least one of event 5, event 6, event 7, event 8, or event 9 occurs or when at least one of condition 5, condition 6, condition 7, condition 8, or condition 9 is met.

Event 5 (or condition 5): An access stratum (access stratum, AS) of the terminal apparatus obtains a new data burst (data burst) or PDU set (PDU set).

For example, that the AS of the terminal apparatus obtains the new data burst or PDU set may include: The AS of the terminal apparatus obtains the new data burst or PDU set from an upper layer (for example, a NAS stratum, an APP layer, an SDAP layer, or a PDCP layer).

For example, the access stratum of the terminal apparatus may trigger the second BSR after receiving a first PDU and/or a service data unit (service data unit, SDU) of the new data burst or PDU set, or may trigger the second BSR after receiving all PDUs and/or SDUs of the data burst or PDU set (or trigger the second BSR after receiving a last PDU and/or SDU of the data burst or PDU set).

For example, the AS may include a service data adaptation protocol (service data adaptation protocol, SDAP) layer, a packet data convergence protocol (packet data convergence protocol, PDCP) layer, or an RLC layer.

For example, the data burst is a set of PDUs generated and sent by an application in a short period of time, for example, a set of PDUs generated and sent by an application in a short period of time.

For example, the PDU set may include one or more PDUs carrying a payload of one unit of information generated at an application level. For example, the PDU set includes one or more PDUs carrying a payload of one unit of information generated at the application level, for example, a frame or video slice of XR and media (XR and media, XRM) services, as used in a technical report (technical report, TR) 26.926. For example, the PDU set includes a frame or a slice. For example, one PDU set includes one frame or one slice.

For example, in some implementations, all PDUs in a PDU set are needed by an application layer to use a corresponding unit of information, or all PDUs in a PDU set are needed by the application layer to obtain (decode) or use a corresponding unit of information. For example, in other implementations, the application layer can still recover part or all of the unit of information when some PDUs are missing.

Optionally, one data burst includes at least one PDU set.

For example, data burst 1 may be associated with one or more data bursts, and the one or more data bursts need to depend on data burst 1. If data burst 1 is discarded, it is likely that the one or more data bursts cannot be decoded. For example, PDU set 1 may be associated with one or more PDU sets, and the one or more PDU sets need to depend on PDU set 1. If PDU set 1 is discarded, it is likely that the one or more PDU sets cannot be decoded.

Event 6 (or condition 6): The terminal apparatus has data (for example, XR data) whose remaining time is less than or equal to a first time threshold. Alternatively, a remaining time of data (for example, XR data) is less than or equal to a first time threshold.

For example, the first time threshold may be configured by the network apparatus for the terminal apparatus, or may be preconfigured, or may be predefined in a protocol, or may be stored by the terminal apparatus, or may be obtained via another approach/algorithm. This is not limited in this application.

Event 7 (or condition 7): Data is present in an LCH that is associated with an XR service and that is of the terminal apparatus, or XR data is present in an LCH of the terminal apparatus, or XR data is present in the terminal apparatus.

Event 8 (or condition 8): The terminal apparatus performs data discarding (discarding) (for example, PDU discarding).

Optionally, condition 8 may include: a data volume of discarded data reaches a first data volume threshold; or a data volume of discarded data reaches the first data volume threshold within a specific period of time; or a data volume of discarded data reaches the first data volume threshold since the terminal apparatus reports a BSR last time; or a data volume of discarded data reaches the first data volume threshold for data whose data volume has been reported in a BSR.

For example, the first data volume threshold may be configured by the network apparatus for the terminal apparatus, or may be preconfigured, or may be predefined in a protocol, or may be stored by the terminal apparatus, or may be obtained via another approach/algorithm. This is not limited in this application.

Event 9 (or condition 9): A variation of a data volume (for example, an increase or a decrease in the data volume) of the terminal apparatus reaches a second data volume threshold, or a variation ratio of the data volume (for example, a ratio by which the data volume increases or decreases) of the terminal apparatus reaches a first data volume variation ratio threshold; or within a specific period of time, a variation of the data volume (for example, an increase or a decrease of the data volume) of the terminal apparatus reaches the second data volume threshold, or a variation ratio of the data volume (for example, a ratio by which the data volume increases or decreases) of the terminal apparatus reaches the first data volume variation ratio threshold; or since the terminal apparatus reports a BSR last time, a variation of the data volume (for example, an increase or a decrease of the data volume) of the terminal apparatus reaches the second data volume threshold, or a variation ratio of the data volume (for example, a ratio by which the data volume increases or decreases) of the terminal apparatus reaches the first data volume variation ratio threshold.

For example, the second data volume threshold may be configured by the network apparatus for the terminal apparatus, or may be preconfigured, or may be predefined in a protocol, or may be stored by the terminal apparatus, or may be obtained via another approach/algorithm. This is not limited in this application.

For example, the first data volume variation ratio threshold may be configured by the network apparatus for the terminal apparatus, or may be preconfigured, or may be predefined in a protocol, or may be stored by the terminal apparatus, or may be obtained via another approach/algorithm. This is not limited in this application.

For example, based on event 9 (or condition 9), a buffer status of the terminal apparatus may be reported to the network apparatus in a timely manner upon variation of a data volume. This helps the network device sense the buffer status of the terminal apparatus, and causes the network apparatus to allocate a resource appropriately or in a timely manner, to improve uplink resource utilization, avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

It should be noted that a BSR trigger condition is not limited in this application, and the terminal apparatus may alternatively trigger the second BSR based on another condition.

It should be noted that S501 may be used as an independent embodiment, and is independent of other steps.

Optionally, S502: The terminal apparatus obtains a first resource.

For example, the first resource is an uplink resource or an uplink grant. For example, the first resource may be a resource allocated by the network apparatus, a resource that may be used for sending a BSR, or a resource that may accommodate a BSR.

Optionally, the terminal apparatus may obtain the first resource after triggering the second BSR. Alternatively, the terminal apparatus may obtain the first resource before triggering the second BSR or when triggering the second BSR.

Optionally, a sequence of performing S501 and S502 is not limited in this application. S501 may be performed before or after S502, or S501 and S502 may be performed at the same time. This is not limited in this application.

S503: The terminal apparatus generates a first BSR.

Optionally, the first BSR may be/be replaced with the second BSR.

Optionally, the first BSR is a truncated BSR or a long truncated BSR or a short truncated BSR. For example, the first BSR is a truncated BSR, and the second BSR is a complete BSR.

Optionally, the first BSR does not include a buffer status of non-XR data. For example, the second BSR includes a buffer status of XR data and a buffer status of non-XR data, and the first BSR does not include a buffer status of non-XR data.

Optionally, the first BSR may include remaining time information (for example, a remaining time range or a remaining time) corresponding to data. For example, the remaining time information corresponding to the data is related to a buffer status corresponding to the data. Alternatively, optionally, the first BSR may not include remaining time information corresponding to data, and the remaining time information corresponding to the data may be indicated (for example, implicitly or explicitly) in a BSR format or in another manner.

Optionally, the first BSR includes first indication information.

For example, the first indication information may indicate that a remaining time field is present or absent or indicate that a buffer size field associated with remaining time information is present or absent, or indicate that the remaining time field and the buffer size field associated with remaining time information are present or absent; or the first indication information may indicate a quantity of remaining time fields, a quantity of buffer size fields associated with remaining time information, or a quantity of pairs of remaining time fields and buffer size fields associated with remaining time information.

For example, the first indication information may include information indicating that a remaining time field is present or absent, or information indicating that a buffer size field associated with remaining time information is present or absent, or information indicating that the remaining time field and the buffer size field associated with remaining time information are present or absent; or the first indication information may include information about a quantity of remaining time fields, information about a quantity of buffer size fields associated with remaining time information, or information about a quantity of pairs of remaining time fields and buffer size fields associated with remaining time information.

For example, the network apparatus may determine, based on the first indication information, that a remaining time field is present or absent, or that a buffer size field associated with remaining time information is present or absent, or that the remaining time field and the buffer size field associated with remaining time information are present or absent; or the network apparatus may determine, based on the first indication information, a quantity of remaining time fields, a quantity of buffer size fields associated with remaining time information, or a quantity of pairs of remaining time fields and buffer size fields associated with remaining time information.

For example, the network apparatus may determine, based on the first indication information, that information indicating that a remaining time field is present or absent, or information indicating that a buffer size field associated with remaining time information is present or absent, or information indicating that the remaining time field and the buffer size field associated with remaining time information is present or absent; or the network apparatus may determine, based on the first indication information, information about a quantity of remaining time fields, information about a quantity of buffer size fields associated with remaining time information, or information about a quantity of pairs of remaining time fields and buffer size fields associated with remaining time information.

Optionally, the first BSR includes fifth indication information.

For example, the fifth indication information may indicate that a buffer size field not associated with remaining time information is present or absent, or the fifth indication information may indicate a quantity of buffer size fields not associated with remaining time information.

For example, the fifth indication information may include information indicating that a buffer size field not associated with remaining time information is present or absent, or the fifth indication information may include information about a quantity of buffer size fields not associated with remaining time information.

For example, the network apparatus may determine, based on the fifth indication information, that a buffer size field not associated with remaining time information is present or absent, or the network apparatus may determine, based on the fifth indication information, a quantity of buffer size fields not associated with remaining time information.

For example, the network apparatus may determine, based on the fifth indication information, information indicating that a buffer size field not associated with remaining time information is present or absent, or the network apparatus may determine, based on the fifth indication information, information about a quantity of buffer size fields not associated with remaining time information.

In this application, the "indicate" may include: directly indicate, indirectly indicate, explicitly indicate, or implicitly indicate.

In this application, "include" may include: directly include, indirectly include, explicitly include, or implicitly include.

For example, "present or absent" may include/be replaced with any one or more of the following: a field is present or absent after the first indication information (or the fifth indication information), a field associated with the first indication information (or the fifth indication information) is present or absent; a field is present or absent in the first BSR, or a field associated with the first indication information (or the fifth indication information) is present or absent in the first BSR; a field associated with the first indication information (or the fifth indication information) is present or absent after the first indication information (or the fifth indication information).

For example, the first indication information may indicate that a remaining time field associated with the first indication information is present or absent, or indicate that a buffer size field associated with the first indication information and associated with remaining time information is present or absent.

For example, the first indication information may include information indicating that the remaining time field associated with the first indication information is present or absent, or information indicating that the buffer size field associated with the first indication information and associated with remaining time information is present or absent.

For example, the network apparatus may determine, based on the first indication information, that the remaining time field associated with the first indication information is present or absent after the first indication information, or that the buffer size field associated with the first indication information and associated with remaining time information is present or absent after the first indication information.

For example, "a quantity of ... fields" may include/be replaced with any one or more of the following: a quantity of ... fields following the first indication information (or the fifth indication information), a quantity of ... fields associated with the first indication information (or the fifth indication information), a quantity of ... fields in the first BSR, or a quantity of ... fields that are associated with the first indication information (or the fifth indication information) and that are in the first BSR; or a quantity of ... fields that follow the first indication information (or the fifth indication information) and that are associated with the first indication information (or the fifth indication information).

For example, the first indication information may indicate the quantity of remaining time fields associated with the first indication information or the quantity of buffer size fields associated with the first indication information and associated with remaining time information.

For example, the first indication information may include information about the quantity of remaining time fields associated with the first indication information or information about the quantity of buffer size fields associated with the first indication information and associated with remaining time information.

For example, the network apparatus may determine, based on the first indication information, a quantity of remaining time fields that follow the first indication information and that are associated with the first indication information or a quantity of buffer size fields that follow the first indication information and that are associated with the first indication information and associated with remaining time information.

For example, the buffer size field may include/be replaced with: a buffer status field or a buffer status.

For example, the remaining time field may include/be replaced with: a field corresponding to remaining time information, or a field corresponding to a remaining time.

For example, the remaining time field may indicate remaining time information, or remaining time information corresponding to data, for example, a value of the remaining time, or a range of the remaining time, or a value of the remaining time corresponding to the data, or a remaining time range corresponding to the data.

Optionally, the first BSR may include remaining time information (for example, a remaining time range or a remaining time) corresponding to data. For example, the remaining time information corresponding to the data is related to a buffer status corresponding to the data. Alternatively, optionally, the first BSR may not include remaining time information corresponding to data, and the remaining time information corresponding to the data may be indicated (for example, implicitly or explicitly) in a BSR format or in another manner.

For example, the first indication information may be a newly added field in a BSR MAC CE, for example, a field N shown in FIG. 4.

For example, the fifth indication information may be a newly added field in the BSR MAC CE, for example, the field N shown in FIG. 4.

For example, the remaining time field corresponds to the buffer size field. For example, one piece of remaining time information corresponds to one buffer size field. Therefore, the first indication information may alternatively indicate that the buffer size field associated with remaining time information is present or absent, or indicate the quantity of buffer size fields associated with remaining time information, for example, the buffer size fields in FIG. 4.

For example, "associated with remaining time information" may include/be replaced with "corresponding to data whose remaining time is less than or equal to the first time threshold".

For example, "a buffer size field associated with remaining time information" may include/be replaced with: a buffer size field corresponding to data whose remaining time is less than or equal to the first time threshold; or the first BSR includes a buffer size field corresponding to the remaining time field.

Optionally, the first indication information may indicate that a remaining time field and/or a buffer size field associated with remaining time information corresponding to data whose remaining time is less than or equal to the first time threshold are/is present or absent.

For example, "not associated with remaining time information" may include/be replaced with "corresponding to data whose remaining time is greater than a second time threshold".

For example, "a buffer size field not associated with remaining time information" may include/be replaced with: a buffer size field of data whose remaining time is greater than the second time threshold; or the first BSR does not include the buffer size field corresponding to the remaining time field.

For example, the first time threshold and the second time threshold may be the same (for example, a same threshold), or may be different. This is not limited in this application.

For example, the first time threshold and/or the second time threshold may be configured by the network apparatus for the terminal apparatus, or may be preconfigured, or may be predefined in a protocol, or may be stored by the terminal apparatus, or may be obtained via another approach/algorithm. This is not limited in this application.

For example, a quantity of bits of the first indication information may be 1 or X. X is greater than or equal to 1.

For example, the quantity of bits of the first indication information is 1, where a value of 1 indicates that a remaining time field is present, and a value of 0 indicates that the remaining time field is absent; or vice versa.

For example, a quantity of bits of the fifth indication information may be 1 or Y. Y is greater than or equal to 1.

For example, the quantity of bits of the fifth indication information is 1, where a value of 1 indicates that a buffer size field not associated with remaining time information is present, and a value of 0 indicates that the buffer size field not associated with remaining time information is absent; or vice versa.

For example, the quantity of bits of the first indication information and/or the quantity of bits of the fifth indication information may be configured by the network apparatus for the terminal apparatus, or may be preconfigured, or may be predefined in a protocol, or may be stored by the terminal apparatus, or may be obtained via another approach/algorithm. This is not limited in this application.

Optionally, the first BSR may include an LCG ID field, an LCH ID field, or an LCH index field.

For example, the first indication information is associated with a first LCG or a first LCH. Alternatively, the first indication information is associated with the LCG ID field or the LCH ID field.

For example, the fifth indication information is associated with the first LCG or the first LCH. Alternatively, the fifth indication information is associated with the LCG ID field or the LCH ID field.

For example, "associated with the first indication information (or the fifth indication information)" may include/be replaced with: associated with the first LCG or the first LCH.

Optionally, information corresponding to a remaining time may be explicitly present in the first BSR. For example, a field corresponding to the remaining time (that is, a remaining time field) is added into the first BSR, and a remaining time value may be directly learned based on the field corresponding to the remaining time. Information corresponding to a remaining time may alternatively be implicitly present in the first BSR. In other words, a remaining time of each piece of data is implicitly reported, that is, the first BSR does not explicitly include remaining time information. By way of example and not limitation, implicit reporting of the remaining time may be implemented by agreeing on a format of a MAC CE, for example, agreeing on a value of a remaining time associated with a buffer size field. In this way, even if the remaining time field is not directly reported, the network apparatus can also learn of a correspondence between the remaining time and the buffer size field.

Optionally, the first indication information may alternatively indicate that remaining time information corresponding to data with a short remaining time is present or absent in the first BSR, or may indicate that a buffer size field associated with remaining time information corresponding to data with a short remaining time is present or absent in the first BSR.

By way of example and not limitation, the data with the short remaining time may be data whose remaining time is less than or equal to the first time threshold.

Optionally, for the data whose remaining time is less than the first time threshold, the first BSR may report a buffer size, a remaining time, and a total remaining buffer size.

Optionally, a BS may be reported per logical channel group LCG, or per logical channel LCH, or per data burst (data burst), or per PDU set, or per remaining time.

For example, when the first indication information is associated with the first LCH or the first LCG, the first indication information indicates that a remaining time field or a buffer size field associated with a remaining time field is present or absent for the first LCH or the first LCG, or indicates, for the LCH or the first LCG, a quantity of remaining time fields or a quantity of buffer size fields associated with remaining time fields.

Optionally, if an LCG or an LCH is not used for transmission of data of an XR service, a BSR corresponding to the LCG or the LCH may not include a newly added field N and (implicit or explicit) information corresponding to a remaining time.

For example, the first indication information may alternatively indicate information about a quantity of pieces of data that correspond to remaining times remaining times and that are in the first BSR, or information about a quantity of fields that correspond to remaining times remaining times and that are in the first BSR. It may be understood that data corresponding to remaining times is further divided into data corresponding to a plurality of remaining times based on values of the remaining times. As a result, information corresponding to a plurality of remaining times are obtained. The information corresponding to the plurality of remaining times is information indicating a plurality of remaining time values, which for example, may be a plurality of fields corresponding to a plurality of remaining times, for example, a remaining time 1 field and a remaining time 2 field in FIG. 4. For example, because information corresponding to a remaining time corresponds to a BS field, that is, information corresponding to each remaining time corresponds to a BS field, the first indication information may alternatively indicate a quantity of buffer size fields that are associated with the remaining time and that are in the first BSR, for example, a buffer size 1 field and a buffer size 2 field in FIG. 4.

For example, the information corresponding to the remaining time may be explicitly present in the BSR. For example, fields corresponding to remaining times (that is, the remaining time 1 field and the remaining time 2 field) are added to the BSR, and remaining time values may be directly learned based on the fields corresponding to the remaining times. The information corresponding to the remaining time may alternatively be implicitly present in the first BSR. In other words, a remaining time of each piece of data is implicitly reported, that is, the first BSR does not explicitly include remaining time information. By way of example and not limitation, implicit reporting of the remaining time may be implemented by agreeing on a BSR MAC CE format, for example, based on an arrangement order of buffer size fields, agreeing on that a first buffer size field is associated with remaining time 1, and a second buffer size field is associated with remaining time 2. In this way, even if the field corresponding to the remaining time is not directly reported, the network apparatus can also learn of a correspondence between the remaining time and the buffer size field. Optionally, the newly added field may alternatively indicate a quantity of pieces of information about data with short remaining times in the first BSR, or a quantity of fields corresponding to data with short remaining times in the first BSR.

Optionally, the first indication information may alternatively indicate a quantity of pieces of remaining time information that correspond to data with short remaining times and that are in the first BSR, or a quantity of buffer size fields that are associated with remaining time information corresponding to data with short remaining times and that are in the first BSR.

For example, data with a remaining time greater than or equal to 15 ms and less than 20 ms is defined as a first piece of data with a short remaining time, data with a remaining time greater than or equal to 10 ms and less than 15 ms is defined as a second piece of data with a short remaining time, and data with a remaining time less than 10 ms is defined as a third piece of data with a short remaining time. The foregoing values are merely used for ease of understanding of the foregoing embodiment. A specific quantity of pieces of data obtained through division and a remaining time or a remaining time range corresponding to each piece of data are not limited in this application.

Optionally, for data whose remaining time is less than a threshold, the first BSR may report N buffer sizes, N remaining times, and a total remaining buffer size.

Optionally, N may be greater than or equal to 1.

Optionally, N may be greater than or equal to 2.

For example, a short remaining time may mean that the remaining time is less than a threshold, or may mean that the remaining time is below a threshold interval.

Optionally, in this embodiment of this application, when the buffer status is reported per data burst or per PDU set, if there is no urgent data, or there is no data associated with a remaining time, or there is no data with a short remaining time, the first BSR may alternatively not include the first indication information (or the newly added field N), and the terminal apparatus may first report buffer size 0 via the first BSR, and not report a subsequent remaining time, and implicitly indicate that there is no urgent data or there is no data associated with a remaining time or data with a short remaining time.

Optionally, if an LCG or an LCH is not for an XR service, the first BSR may not include the first indication information and a subsequent BS field associated with a remaining time.

S504. The terminal apparatus sends the first BSR.

Correspondingly, the network apparatus receives the first BSR from the terminal apparatus.

Optionally, the network apparatus allocates a transmission resource to the terminal apparatus based on the first BSR.

For example, the terminal apparatus sends the first BSR on the first resource.

For example, in this embodiment of this application, when simultaneously indicating, to the network apparatus via one BSR, a buffer status associated with remaining time information and a buffer status not associated with remaining time information, the terminal apparatus causes, based on first indication information in the BSR, the network apparatus to correctly interpret a meaning of each bit in the BSR, so that the network apparatus can correctly understand a buffer status of the terminal apparatus, and the network apparatus can appropriately allocate a resource, to improve uplink resource utilization, and avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

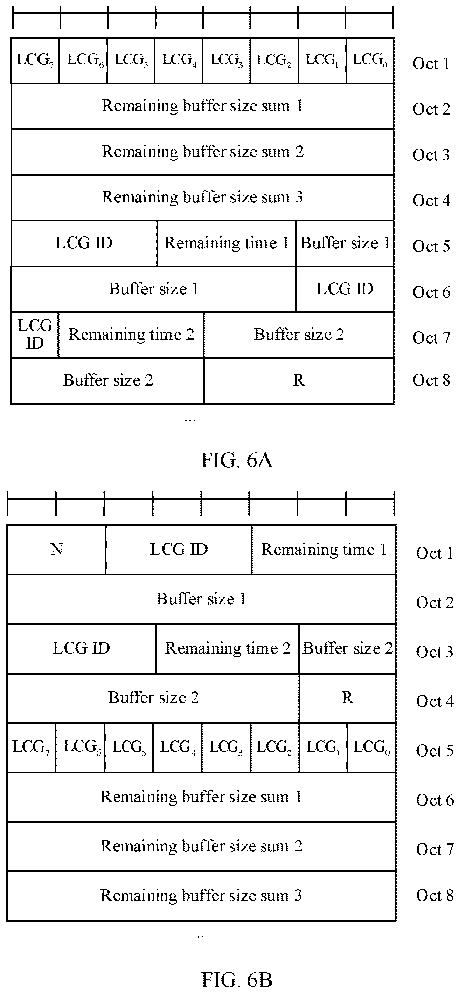

FIG. 6A and FIG. 6B show two BSR (or BSR MAC CE) formats according to an embodiment of this application.

As shown in FIG. 6A and FIG. 6B, the BSR MAC CE may include an LCGᵢ field, a field R, a remaining time field, a buffer size field, and a remaining buffer size sum field. For explanations of the remaining time field, the buffer size field, and the remaining buffer size sum field, reference may be made to explanations of corresponding fields in FIG. 4. Details are not described herein again. The following describes meanings of other fields:
1. The field R is a reserved field and may be set to 0 generally.
2. LCGᵢ field:

Optionally, the LCGᵢ field indicates whether a buffer size field for logical channel group i is present. Details are as follows:
a. The LCGᵢ field set to "1" indicates that a buffer size field for logical channel group i is reported.
b. The LCGᵢ field set to "0" indicates that the buffer size field for logical channel group i is not reported.

Optionally, the LCGᵢ field indicates whether logical channel group i has data available. Details are as follows:
a. The LCGᵢ field set to "1" indicates that logical channel group i has data available.
b. The LCGᵢ field set to "0" indicates that logical channel group i has no data available.

Optionally, the LCGᵢ field may alternatively be replaced with an LCHi field or an LCH index i field.

Optionally, the LCHi field or the LCH index i field indicates whether a buffer size field for logical channel i or logical channel index i is present. Details are as follows:
a. The LCGᵢ field set to "1" indicates that the buffer size field for logical channel i or logical channel index i is reported.
b. The LCGᵢ field set to "0" indicates that the buffer size field for logical channel i or logical channel index i is not reported.

Optionally, the LCHi field or the LCH index i field indicates whether logical channel i or logical channel index i has data available. Details are as follows:
a. The LCGᵢ field set to "1" indicates that logical channel i or logical channel index i has data available.
b. The LCGᵢ field set to "0" indicates that logical channel i or logical channel index i has no data available.

By way of example and not limitation, as shown in FIG. 6A, if LCG₁, LCG₃, and LCG₇ fields are all set to "1", and LCG₀, LCG₂, LCG₄, LCG₅, and LCG₆ fields are all set to "0", it indicates that only the three logical channel groups, LCG₁, LCG₃, and LCG₇, have remaining buffer size sum fields, and other logical channel groups do not have a remaining buffer size sum field. Based on a value of the LCGᵢ field, the network apparatus may learn that the LCGᵢ field is followed by three remaining buffer size sum fields, and the network apparatus may correctly interpret corresponding bits based on this format. Correspondingly, there are three remaining buffer size sum fields below the LCGᵢ field, and the three remaining buffer size sum fields respectively indicate remaining buffer size sum fields corresponding to LCG₁, LCG₃, and LCG₇ (for example, a sequence is not limited in this application). A field following the three remaining buffer size sum fields is related to a buffer size field associated with remaining time information. The network apparatus may interpret a corresponding bit based on a corresponding format.

For example, as shown in FIG. 6B, a buffer size field associated with remaining time information precedes an LCGᵢ field and three remaining buffer size sum fields, and a field N indicates information about a quantity of bytes or bits included in a field (for example, an LCG ID field, a remaining time 1 field, a remaining time 2 field, a buffer size 1 field, or a buffer size 2 field) preceding the LCGᵢ field. For meanings of the LCGᵢ field and the three remaining buffer size sum fields, refer to descriptions corresponding to FIG. 6A. The network apparatus may interpret a corresponding bit based on a corresponding format.

It may be understood that the foregoing problem is resolved via a placement order of fields in the BSR MAC CE.

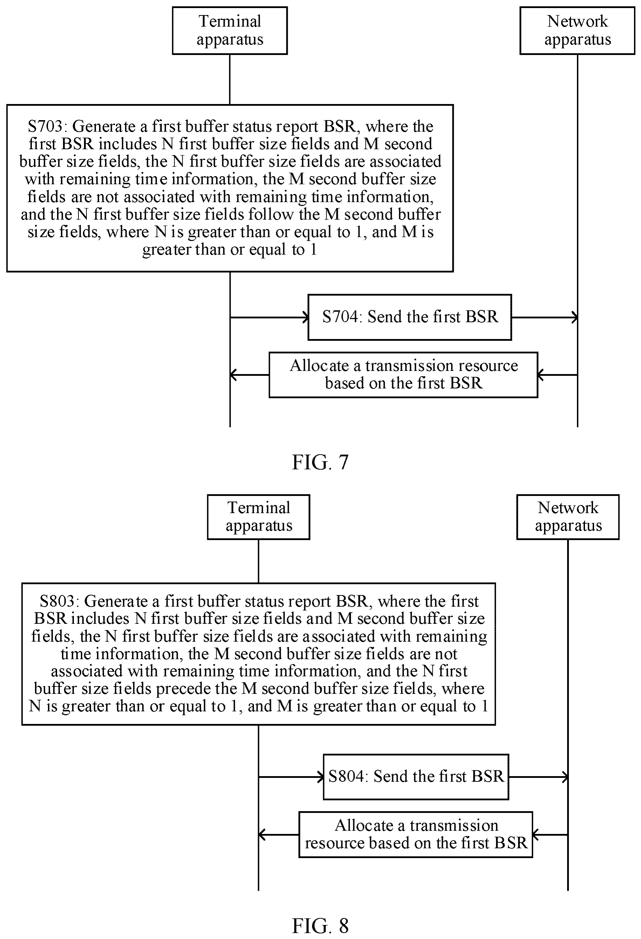

FIG. 7 shows another communication method according to an embodiment of this application. The method includes the following steps.

Optionally, S701: A terminal apparatus triggers a second BSR.

For example, for content related to "a terminal apparatus triggers a second BSR" or content related to the second BSR, reference may be made to the content in the embodiment shown in FIG. 5. Details are not described herein again.

Optionally, S702: The terminal apparatus obtains a first resource.

For example, for content related to "the terminal apparatus obtains a first resource" or content related to the first resource, reference may be made to the content in the embodiment shown in FIG. 5. Details are not described herein again.

S703: The terminal apparatus generates a first BSR.

For example, "generate" may include/be replaced with: determine.

Optionally, the first BSR includes N first buffer size fields and M second buffer size fields.

For example, the N first buffer size fields are associated with remaining time information.

For example, the M second buffer size fields are not associated with remaining time information, and the N first buffer size fields follow the M second buffer size fields.

For example, N is greater than or equal to 1.

For example, M is greater than or equal to 1 (or 0). For example, if values of all LCGᵢ fields are 0, the second buffer size field is absent. For example, the N first buffer size fields follow the LCGᵢ field.

Optionally, the first BSR includes N first buffer size fields and an LCGᵢ field. For example, the N first buffer size fields follow the LCGᵢ field.

For example, "the N first buffer size fields are associated with remaining time information" may include/be replaced with: The N first buffer size fields correspond to data whose remaining time is less than or equal to a first time threshold; or the first BSR includes remaining time fields (for example, N remaining time fields) corresponding to the N first buffer size fields.

For example, "the M second buffer size fields are not associated with remaining time information" may include/be replaced with: The M second buffer size fields correspond to data whose remaining time is greater than a second time threshold; or the first BSR does not include remaining time fields corresponding to the M second buffer size fields.

For example, as shown in FIG. 6A, one or more remaining buffer size sum fields not associated with remaining time information may be arranged before one or more buffer size fields associated with remaining time information.

Optionally, the remaining time information may be explicitly present in the first BSR, or may be implicitly present in the first BSR.

Optionally, a BS may be reported per logical channel group LCG, or per logical channel LCH, or per data burst (data burst), or per PDU set, or per remaining time.

S704: The terminal apparatus sends the first BSR.

Correspondingly, a network apparatus receives the first BS from the terminal apparatus.

For example, the terminal apparatus sends the first BSR on the first resource.

Optionally, the network apparatus allocates a transmission resource to the terminal apparatus based on the first BSR.

For example, in this embodiment of this application, when simultaneously indicating, to the network apparatus via one BSR, a buffer status associated with remaining time information and a buffer status not associated with remaining time information, the terminal apparatus can cause, via relative locations of a buffer size field associated with remaining time information and a buffer size field (or an LCGᵢ field) not associated with remaining time information, the network apparatus to accurately understand a format of the BSR (or cause the network apparatus to correctly interpret a meaning of each bit in the BSR), so that the network apparatus can correctly understand a buffer status of the terminal apparatus, and the network apparatus can appropriately allocate a resource, to improve uplink resource utilization, avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

FIG. 8 shows another communication method according to an embodiment of this application. The method includes the following steps.

Optionally, S801: A terminal apparatus triggers a second BSR.

For example, for content related to "a terminal apparatus triggers a second BSR" or content related to the second BSR, reference may be made to the content in the embodiment shown in FIG. 5. Details are not described herein again.

Optionally, S802: The terminal apparatus obtains a first resource.

For example, for content related to "the terminal apparatus obtains a first resource" or content related to the first resource, reference may be made to the content in the embodiment shown in FIG. 5. Details are not described herein again.

S803: The terminal apparatus generates a first BSR.

Optionally, the first BSR includes N first buffer size fields and M second buffer size fields.

For example, the N first buffer size fields are associated with remaining time information.

For example, the M second buffer size fields are not associated with remaining time information.

For example, the N first buffer size fields precede the M second buffer size fields.

For example, N is greater than or equal to 1.

For example, M is greater than or equal to 1 (or 0). For example, if values of all LCGᵢ fields are 0, the second buffer size field is absent. For example, the N first buffer size fields follow the LCGᵢ field.

Optionally, the first BSR includes N first buffer size fields and an LCGᵢ field. The N first buffer size fields follow the LCGᵢ field.

Optionally, the first BSR includes second indication information.

For example, the second indication information may indicate a quantity of remaining time fields, or a quantity of buffer size fields associated with remaining time information, or a quantity of pairs of remaining time fields and buffer size fields associated with remaining time information, or a quantity of Ns, or a quantity of Ms, or (a quantity of bytes or bits occupied by the M second buffer size fields and the LCGᵢ field); or the second indication information may indicate a quantity of bytes or bits included before the M second buffer size fields, a quantity of bytes or bits included before the M second buffer size fields and the LCGᵢ fields, or a quantity of bytes or bits occupied by the N first buffer size fields and a field related to the N first buffer size fields.

For example, the second indication information may include information about a quantity of remaining time fields, or a quantity of buffer size fields associated with remaining time information, or a quantity of pairs of remaining time fields and buffer size fields associated with remaining time information, or a quantity of Ns, or a quantity of Ms, or (a quantity of bytes or bits occupied by the M second buffer size fields and the LCGᵢ field); or the second indication information may include information about a quantity of bytes or bits included before the M second buffer size fields, information about a quantity of bytes or bits included before the M second buffer size fields and the LCGᵢ fields, or information about a quantity of bytes or bits occupied by the N first buffer size fields and a field related to the N first buffer size fields.

Optionally, the LCGᵢ field may alternatively be replaced with an LCHi field or an LCH index i field.

For example, as shown in FIG. 6B, one or more remaining buffer size sum fields not associated with remaining time information may be arranged after one or more buffer size fields associated with remaining time information.

Optionally, a BS may be reported per logical channel group LCG, or per logical channel LCH, or per data burst (data burst), or per PDU set, or per remaining time.

S804: The terminal apparatus sends the first BSR.

Correspondingly, a network apparatus receives the first BSR from the terminal apparatus, and allocates a transmission resource to the terminal apparatus based on the first BSR.

For example, in this embodiment of this application, when simultaneously indicating, to the network apparatus via one BSR, a buffer status associated with remaining time information and a buffer status not associated with remaining time information, the terminal apparatus causes, based on second indication information in the BSR, the network apparatus to correctly interpret a meaning of each bit in the BSR, so that the network apparatus can correctly understand a buffer status of the terminal apparatus, and the network apparatus can appropriately allocate a resource, to improve uplink resource utilization, and avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

It may be understood that a quantity of bits occupied by each field in FIG. 4, FIG. 6A, and FIG. 6B is merely used as examples, and a quantity of bits occupied by a field are not limited in this embodiment of this application.

If the terminal apparatus sends a BSR with (for example, implicit or explicit) remaining time information to the network apparatus, the remaining time information indicated by the BSR (for example, the BSR includes or does not include a remaining time field) may be: a remaining time corresponding to data when UE calculates a BS, or a remaining time corresponding to data when the UE generates the BSR, or a remaining time corresponding to data when the UE sends the BSR.

After receiving the BSR, the network apparatus parses the BSR to obtain the remaining time information indicated by the BSR. It may be understood that, when a base station decodes the remaining time information indicated by the BSR, a specific period of time may have elapsed since the UE calculates the BSR, the UE generates the BSR, or the UE sends the BSR. Therefore, when the base station decodes the remaining time information indicated by the BSR, the remaining time corresponding to the data has changed. Especially, in a case of HARQ retransmission, the specific period of time may be relatively long. For example, the specific period of time may be a time difference (or a delay) between a time at which the terminal apparatus generates the BSR, or a time at which the terminal apparatus determines the remaining time information in the BSR, or a time at which the UE reports the BSR, and a time at which the network apparatus decodes the remaining time in the BSR. In this case, if the network apparatus directly uses the remaining time information indicated by the BSR as actual remaining time information of the data to perform resource scheduling or allocation, a scheduled transmission resource may not meet the delay requirement of the data of the terminal apparatus, and consequently, data times out. Especially, for a service that has an ultra-low-latency requirement, like an XR service, service performance is directly affected negatively.

In view of this, embodiments of this application provide a communication method and a communication apparatus. A format of a BSR is improved, to cause the network apparatus to obtain actual remaining time information of data after the network apparatus receives the BSR, so that the base station can perform appropriate resource scheduling, to meet the delay requirement of the data of the terminal apparatus, thereby ensuring service reliability and service performance.

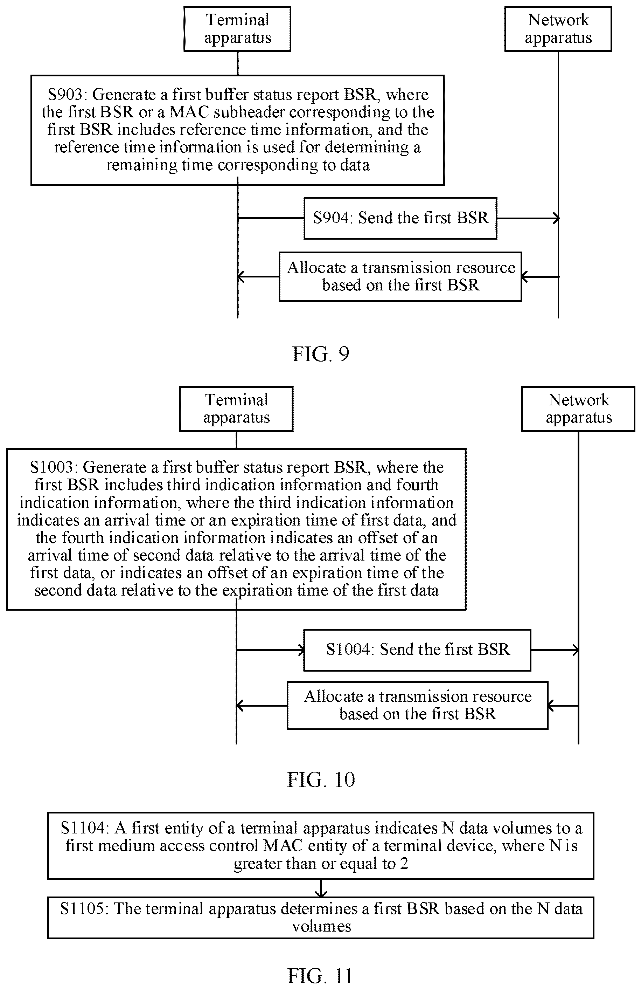

FIG. 9 shows a communication method according to an embodiment of this application. The method includes the following steps.

Optionally, S901: A terminal apparatus triggers a second BSR.

For example, for content related to "a terminal apparatus triggers a second BSR" or content related to the second BSR, reference may be made to the content in the embodiment shown in FIG. 5. Details are not described herein again.

Optionally, S902: The terminal apparatus obtains a first resource.

For example, for content related to "the terminal apparatus obtains a first resource" or content related to the first resource, reference may be made to the content in the embodiment shown in FIG. 5. Details are not described herein again.

S903: The terminal apparatus generates a first buffer status report BSR, where the first BSR or a MAC subheader corresponding to the first BSR includes reference time information.

Optionally, the reference time information is used for determining a remaining time corresponding to data.

For example, "used for determining a remaining time corresponding to data" may include/be replaced with: used for a network device to determine the remaining time (for example, an actual remaining time) corresponding to the data; and/or used for the terminal apparatus to determine the remaining time corresponding to the data (for example, remaining time information indicated by the first BSR).

For example, a remaining time corresponding to data may include/be replaced with any one or more of the following: a remaining time, or a remaining time corresponding to a buffer status.

Optionally, the reference time information indicates a reference time of the remaining time information indicated by the first BSR.

Optionally, "indicated by the first BSR" may include/be replaced with: included in the first BSR.

For example, the reference time information may indicate a reference time for calculating the remaining time or a reference time for sending the first BSR.

For example, the remaining time information indicated by the first BSR may alternatively be calculated based on the reference time.

For example, calculation may include/be replaced with: determining.

Optionally, the reference time information may indicate a time point at which the terminal apparatus calculates the remaining time, or a time point at which the remaining time information indicated by the first BSR is generated, or indicate a time point at which the first BSR is generated, or indicate a time point at which the first BSR is sent.

Optionally, the reference time information may include any one or more of a frame, a subframe, a slot number, and a symbol.

Optionally, the reference time information may include an SFN field and/or a subframe field.

For example, the SFN field (or a frame field) is used for determining the remaining time corresponding to the data. For example, the subframe field is used for determining the remaining time corresponding to the data.

For example, the SFN field indicates lower L bits of an SFN (or a frame number), or lower L bits of an SFN used for determining the remaining time corresponding to the data. For example, L may be 3, 4, or another value. This is not limited in this application. For example, considering that a time for HARQ retransmission or a time difference mentioned in a problem is generally not very long, it is not necessary to indicate all bits of the SFN, and only a part of the bits are indicated, so that air interface resources can be saved.

For example, the subframe field indicates a subframe, or a subframe used for determining the remaining time corresponding to the data. A length/quantity of bits of the subframe field is 4 bits or another value. This is not limited in this application.

S904: The terminal apparatus sends the first BSR.

Correspondingly, a network apparatus receives the first BSR from the terminal apparatus.

Optionally, the network apparatus allocates a transmission resource to the terminal apparatus based on the first BSR.

For example, after receiving the first BSR, the network apparatus may obtain, by parsing the first BSR, the remaining time information indicated by the first BSR, and may obtain the reference time through the reference time information included in the first BSR or the MAC subheader corresponding to the first BSR. In addition, the network apparatus may further obtain/learn of a time point at which the first BSR is decoded, and may obtain, through the remaining time indicated by the first BSR, the reference time, and the time point at which the first BSR is decoded, the actual remaining time corresponding to the data.

The actual remaining time corresponding to the data may be calculated through the following formula:

Actual remaining time corresponding to the data=remaining time indicated by the first BSR-(time point at which the first BSR is decoded-reference time).

Optionally, a unit of the remaining time may be: subframe, slot (slot), symbol (symbol), millisecond, or the like. This is not limited in this application. For example, the remaining time is two slots.

For example, in this embodiment, the BSR or the MAC subheader includes the reference time information, so that the network apparatus can obtain the remaining time information of the data after the network apparatus receives the BSR, and the base station can perform appropriate resource scheduling, to meet a delay requirement of the data of the terminal apparatus, thereby ensuring service reliability and service performance.

The foregoing embodiment is a communication method designed based on a case in which the BSR indicates the remaining time information. This application further provides a communication method that is not based on the case in which the BSR indicates the remaining time information, which can also resolve the foregoing problem. In addition, the delay requirement of the data of the terminal apparatus can also be met, so as to ensure normal service provision.

FIG. 10 shows a communication method according to an embodiment of this application. The method includes the following steps.

Optionally, S1001: A terminal apparatus triggers a second BSR.

For example, for content related to "a terminal apparatus triggers a second BSR" or content related to the second BSR, reference may be made to the content in the embodiment shown in FIG. 5. Details are not described herein again.

Optionally, S1002: The terminal apparatus obtains a first resource.

For example, for content related to "the terminal apparatus obtains a first resource" or content related to the first resource, reference may be made to the content in the embodiment shown in FIG. 5. Details are not described herein again.

S1003: The terminal apparatus generates a first buffer status report BSR, where the first BSR includes third indication information and fourth indication information.

For example, the third indication information indicates information about an arrival time or expiration time of first data, or indicates time information, or indicates time information related to the first data.

For example, the fourth indication information indicates information about an offset of an arrival time of second data relative to the arrival time of the first data, or information indicate an offset of an expiration time of the second data relative to the expiration time of the first data, or information indicate an offset of a time related to the second data relative to a time related to the first data.

For example, the offset may include/be replaced with: a time offset, or a time interval, or an interval.

Optionally, a remaining time corresponding to the first data may be minimum or maximum.

Optionally, in data for reporting a buffer status in the first BSR, the first data may be data that arrives earliest or latest at an access stratum AS of the terminal apparatus, or the first data may be data that is earliest or latest obtained by the access stratum AS of the terminal apparatus.

Optionally, in data whose buffer statuses are reported in the first BSR, the arrival time or expiration time of the first data is earliest or latest.

For example, the AS may include a service data adaptation protocol (service data adaptation protocol, SDAP) layer, a packet data convergence protocol (packet data convergence protocol, PDCP) layer, or an RLC layer.

For example, the data that arrives earliest or latest at the access stratum AS of the terminal apparatus may include/be replaced with data that arrives earliest or latest.

Optionally, in an embodiment, the terminal apparatus reports time information to the network apparatus, and may report an arrival time of data that arrives earliest/latest; and for other data, may report a time offset of an arrival time of the other data relative to the arrival time of the data that arrives earliest/latest.

For example, an arrival time of data may include/be replaced with a time at which the data arrives at the access stratum AS of the terminal apparatus.

For example, the access stratum AS of the terminal apparatus receives data set 1 at a first time, and receives data set 2 at a second time. When reporting the first BSR to the network apparatus, the terminal apparatus may report specific information of the first time for data set 1, and may report only a time offset (or a time interval) between the first time and the second time for data set 2.

Optionally, in another embodiment, the terminal apparatus reports time information to the network apparatus, and may report an expiration time of data that arrives earliest/latest, and for other data, may report a time offset of an expiration time of the other data relative to the expiration time of the data that arrives earliest/latest.

For example, an expiration time of data may include/be replaced with: a time at which the access stratum AS of the terminal apparatus deletes/discards the data, or a time at which a remaining time of the data is 0.

For example, the access stratum AS of the terminal apparatus receives data set 1 at the first time (which may be understood as the arrival time of the first data), and receives data set 2 at the second time (which may be understood as the arrival time of the second data). An expiration time of data set 1 may be a first data expiration time, and an expiration time of data set 2 may be a second data expiration time. When reporting the first BSR to the network apparatus, the terminal apparatus may report specific information about the first data expiration time for data set 1, and needs to report only a time offset (or a time interval) between the first data expiration time and the second data expiration time for data set 2.

Optionally, the arrival time or the expiration time may include a frame, a subframe, a slot number, or the like.

Optionally, the arrival time or the expiration time may include an SFN field and/or a subframe field.

For example, the SFN field (or a frame field) indicates a radio frame of an arrival time or expiration time of data. For example, the subframe field indicates a subframe of an arrival time or expiration time of data.

For example, the SFN field indicates lower L bits of an SFN (or a frame number), or lower L bits of an SFN of a radio frame of an arrival time or expiration time of data, or lower L bits of an SFN of an arrival time or expiration time of data. For example, L may be 3, 4, or another value. This is not limited in this application. For example, considering that a time for HARQ retransmission or a time difference mentioned in a problem is generally not very long, it is not necessary to indicate all bits of the SFN, and only a part of the bits are indicated, so that air interface resources can be saved.

For example, the subframe field indicates a subframe, or a subframe indicating an arrival time or expiration time of data. A length/quantity of bits of the subframe field is 4 bits or another value. This is not limited in this application.

Optionally, a unit of the time offset may be: frame, subframe, slot (slot), symbol (symbol), or millisecond. For example, the remaining time is two slots.

S1004: The terminal apparatus sends the first BSR.

Correspondingly, a network apparatus receives the first BSR from the terminal apparatus.

Optionally, the network apparatus allocates a transmission resource to the terminal apparatus based on the first BSR.

For example, after receiving the first BSR, the network apparatus may directly or indirectly obtain the arrival time (or expiration time) of the first data based on the first BSR, or may calculate an arrival time (or expiration time) of other data (or the second data) based on the arrival time (or expiration time) of the first data and an offset of the arrival time (or expiration time) of the other data (or the second data) relative to the arrival time (or expiration time) of the first data.

For example, in this embodiment, the terminal apparatus does not need to report an arrival time (or expiration time) for each piece of data, and may indicate only an arrival time (or expiration time) of one piece of data. In this way, air interface resources can be saved.

For example, in this embodiment of this application, the terminal apparatus causes, based on fourth indication information in a BSR, the network apparatus to correctly understand a buffer status and a remaining time of the terminal apparatus, so that the network apparatus can appropriately allocate a resource, to improve uplink resource utilization, avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

For example, a user plane protocol stack architecture, that is, a protocol cluster used for user data transmission, may include a service data adaptation protocol (service data adaptation protocol, SDAP) layer, a packet data convergence protocol (packet data convergence protocol, PDCP) layer, a radio link control (radio link control, RLC) layer, a medium access control (medium access control, MAC) layer, and a physical (physical, PHY) layer.

For example, a control plane protocol stack architecture is a protocol cluster used for control signaling transmission of a system, and may include a non-access stratum (non-access stratum, NAS), a radio resource control (radio resource control, RRC) layer, a PDCP layer, an RLC layer, a MAC layer, and a PHY layer.

For example, protocol data units (protocol data units, PDUs) may be classified into two types: data PDUs (data PDUs) and control PDUs (control PDUs).

For example, the control PDU may include a PDCP control PDU (or a control PDU of a PDCP layer) and/or an RLC control PDU (or a control PDU of an RLC layer).

For example, a PDCP data PDU may carry control plane data and/or user plane data. For example, the PDCP control PDU mainly carries any one or more of robust header compression (robust header compression, ROHC) feedback, ethernet header compression (ethernet header compression, EHC) feedback, and a PDCP status report.

For example, an RLC data PDU may include any one or more of a transparent mode data (Transparent Mode Data, TMD) PDU, an unacknowledged mode data (Unacknowledged Mode Data, UMD) PDU, and an acknowledged mode data (Acknowledged Mode Data, AMD) PDU. For example, the RLC control PDU mainly includes a STATUS PDU.

Buffer status report (buffer status reporting, BSR): The terminal device may send a BSR to the network device, to request a resource from the network device. For example, if the terminal device needs to send data to the network device, the terminal device may send a BSR to the network device, to indicate, to the network device, a size of to-be-sent data of the terminal device. The network device may determine, based on the BSR, the size of the to-be-sent data of the terminal device, and then configure an uplink resource for the terminal device. The terminal device sends the data to the network device based on the uplink resource configured by the network device.

For example, a PDCP entity of the terminal device may submit the data to an RLC entity of the terminal device. The PDCP entity of the terminal device indicates a PDCP data volume to a MAC entity of the terminal device, and/or the RLC entity of the terminal device indicates an RLC data volume to the MAC entity of the terminal device. The MAC entity generates a BSR based on the data volume indicated by the PDCP entity and/or the data volume indicated by the RLC entity, and sends the BSR to the network device.

### 1. Indication of a PDCP data volume

For example, the PDCP data volume may include one or more of the following:
(1) a PDCP service data unit (service data unit, SDU) for which a PDCP data PDU has not been built;
(2) a PDCP data PDU that has not been submitted to a lower layer (for example, the RLC layer);
(3) a PDCP control PDU;
(4) for an acknowledged mode (acknowledged mode, AM) DRB, a to-be-retransmitted PDCP SDU; or
(5) for the AM DRB, a to-be-retransmitted PDCP data PDU.

In this embodiment of this application, the PDCP entity of the terminal apparatus may be associated with one or more RLC entities.

In a standalone (standalone, SA) scenario, one PDCP entity may be associated with one RLC entity. For example, the PDCP entity may deliver data to an RLC entity associated with the PDCP entity, and indicate the PDCP data volume to the MAC entity or a MAC entity associated with the RLC entity.

In a carrier aggregation (carrier aggregation, CA) and/or dual connectivity (dual connectivity, DC) scenario, one PDCP entity may be associated with one or more RLC entities.

For example, if PDCP duplication (PDCP duplication) is configured for the terminal device, the PDCP entity may deliver a data PDU to each activated RLC entity, and deliver a control PDU only to a primary RLC (primary RLC) entity. RLC entities associated with the PDCP entity may include one primary RLC entity and one or more secondary RLC entities. The activated RLC entity may include the primary RLC entity. Optionally, the activated RLC entity may further include one or more secondary RLC entities associated with the PDCP entity. For indication of a data volume:
the PDCP entity may indicate a PDCP data volume to the MAC entity associated with the primary RLC entity.

The PDCP entity may indicate, to a MAC entity associated with another activated RLC entity, a PDCP data volume other than the control PDU. The another activated RLC entity includes an RLC entity other than the primary RLC entity in the activated RLC entity.

The PDCP entity may indicate, to a MAC entity associated with the deactivated RLC entity, that the PDCP data volume is 0.

If a split radio bearer (split Radio Bearer, split RB) is configured for the terminal device, when the data volume is relatively large, the PDCP entity may submit data to the primary RLC entity or a split secondary RLC (split secondary RLC) entity; or when the data volume is relatively small, the PDCP entity may submit data to the primary RLC entity. For indication of the data volume:
when the data volume is relatively large, the PDCP entity may indicate the PDCP data volume to the MAC entity associated with the primary RLC entity and a MAC entity associated with the split secondary RLC entity, and indicate, to another RLC entity, that the PDCP data volume is 0. The MAC entity associated with the primary RLC entity and the MAC entity associated with the split secondary RLC entity may be a same MAC entity or different MAC entities.

When the data volume is relatively small, the PDCP entity may indicate the PDCP data volume to the MAC entity associated with the primary RLC entity, and indicate, to another RLC entity, that the PDCP data volume is 0.

### 2. Indication of an RLC data volume

For example, the RLC data volume may include one or more of the following:
(1) an RLC SDU and/or an RLC SDU segment that have/has not been included in an RLC data PDU;
(2) an RLC data PDU waiting to be initially transmitted;
(3) an RLC data PDU (for example, RLC AM) waiting to be retransmitted; or
(4) a STATUS PDU.

For example, if the STATUS PDU has been triggered and a t-StatusProhibit timer is not running or has expired, for the STATUS PDU to be transmitted in a next transmission occasion, the terminal apparatus may estimate a size of the STATUS PDU and may consider the STATUS PDU as a part of the RLC data volume.

For example, the STATUS PDU is an RLC status report.

For example, the t-StatusProhibit timer is used for limiting transmission of the STATUS PDU.

For example, a control PDU at the RLC layer includes a STATUS PDU, and a status report (for example, the STATUS PDU) is present in an AM only.

For example, in transmission at the RLC layer, a priority of the control PDU is the highest, a priority of a retransmitted data PDU is the second highest, and a priority of a newly transmitted data PDU is the lowest.

It may be understood that, in a conventional technology, when indicating a data volume to the MAC entity of the terminal apparatus, the PDCP entity of the terminal apparatus indicates only one PDCP data volume for one RLC entity. Similarly, when the RLC entity indicates a data volume to the MAC entity, one RLC entity also indicates only one RLC data volume. However, for an XR service, when reporting the BSR, UE may distinguish different remaining times for different data. For example, a data volume (or a buffer status) corresponds to a remaining time. For example, for one LCH or one LCG, the UE may need to simultaneously report one or more BS fields via one BSR. Different BS fields may correspond to remaining times, for example, one BS field corresponds to a first remaining time, and another BS field corresponds to a second remaining time. It may be understood that an existing technology for indicating a PDCP data volume and indicating an RLC data volume cannot meet/match BSR reporting. As a result, the BSR reported by the UE may be unable to indicate remaining times corresponding to different data. Consequently, the network apparatus may be unable to perform appropriate resource allocation when allocating an uplink transmission resource. This may cause a transmission delay, a transmission failure, or another problem to data of some services, or may cause a resource waste. This results in a negative impact on service transmission reliability, service performance, and the system capacity.

In view of this, embodiments of this application provide a communication method and a communication apparatus, to cause indication of the PDCP data volume and indication of the RLC data volume to match reporting of the BSR in the foregoing case, so as to ensure normal service provision. In this way, the network apparatus can more clearly learn of the buffer status of the terminal apparatus, so that the network apparatus can appropriately allocate a resource, to improve uplink resource utilization, avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

The following describes how the RLC entity indicates a data volume to the MAC entity in this embodiment of this application.

There may be the following two cases when the RLC entity of the terminal apparatus indicates the data volume to the MAC entity of the terminal apparatus.

Case 1: A part of data indicates remaining time information, and another part of data does not indicate remaining time information.

For example, a part of data (for example, data of an XR service) has a remaining time, and another part of data (for example, data of a non-XR service) has no remaining time. For data with a remaining time, a data volume and (implicit or explicit) remaining time information corresponding to the data volume may be indicated; and for data with no remaining time, only a data volume may be indicated.

For example, for data with a short remaining time, a data volume and (implicit or explicit) remaining time information corresponding to the data volume may be indicated; and for data with a long remaining time, only a data volume may be indicated.

Optionally, the data with the short remaining time may be data whose remaining time is less than or equal to a first time threshold.

Optionally, the data with the long remaining time may be data whose remaining time is greater than a second time threshold.

For example, for data whose remaining time is less than or equal to the first time threshold, the RLC entity may indicate, to the MAC entity, one or more pieces of remaining time information (explicitly or implicitly) and one or more data volumes corresponding to the one or more pieces of remaining time information.

For example, for data whose remaining time is greater than the second time threshold, the RLC entity may indicate a data volume to the MAC entity.

For example, there are two or more pieces of data corresponding to different remaining times, and the RLC entity may indicate two or more pieces of remaining time information to the MAC entity.

Case 2: Remaining time information is indicated for all data.

For example, the RLC entity of the terminal apparatus may indicate, for each piece of data, a data volume and (implicit or explicit) remaining time information corresponding to the data volume.

For example, the RLC entity indicates, to the MAC entity, one or more pieces of remaining time information (implicitly or explicitly) and one or more corresponding data volumes corresponding to the one or more pieces of remaining time information.

It should be noted that the control control PDUs of the PDCP layer and the RLC layer have no corresponding remaining time, and a transmission priority of the control PDU is higher than that of the data PDU (for example, a retransmitted data PDU and/or a newly transmitted data PDU). In this case, if the data volume of the control PDU is included in a data volume corresponding to non-urgent data or a data volume corresponding to a relatively long remaining time, because transmission of the control PDU may be prior to transmission of the data PDU, transmission of the control PDU may occupy a resource allocated by the network apparatus for urgent data or data with a relatively short remaining time. As a result, the resource originally allocated by the network apparatus to the urgent data or the data with the relatively short remaining time may be insufficient to transmit the urgent data or the data with the relatively short remaining time. Consequently, the urgent data or the data with the relatively short remaining time cannot be transmitted in accordance with the delay requirement. This results in a negative impact on a system capacity, and/or service transmission reliability, and/or service transmission quality.

By way of example and not limitation, that there is no remaining time information for some data may indicate that the data is non-urgent data; and that there is remaining time information for some data and the remaining time is very short may indicate that the data is urgent data, and the network apparatus may allocate a transmission resource for the urgent data preferentially/as soon as possible during resource scheduling.

To avoid the foregoing problem, the terminal apparatus may include the data volume of the control PDU in a data volume corresponding to data with a minimum remaining time, or a data volume corresponding to the minimum remaining time. For example, the data volume corresponding to the minimum remaining time may include: a remaining time of the control PDU is the minimum remaining time. For example, a minimum remaining time is generated for the control PDU. For example, the data volume corresponding to the minimum remaining time may include a data volume of data, or may not include the data volume of the data.

The following describes how the PDCP entity indicates a data volume to the MAC entity in this embodiment of this application.

There may be the following two cases when the PDCP entity of the terminal apparatus indicates the data volume to the MAC entity of the terminal apparatus.

Case 1: A part of data indicates remaining time information, and another part of data does not indicate remaining time information.

In an embodiment, for data with a short remaining time, a data volume and (implicit or explicit) remaining time information corresponding to the data volume may be indicated; and for data with a long remaining time, only a data volume may be indicated.

For example, in an SA scenario or a non-split RB scenario, the PDCP entity may not distinguish data when submitting the data to the RLC entity. For example, one PDCP entity is connected to one RLC entity, the PDCP entity may submit all data to the RLC entity, and the PDCP entity may indicate a PDCP data volume to a MAC entity corresponding to RLC. For example, for data whose remaining time is less than or equal to the first time threshold, the PDCP entity may indicate, to the MAC entity corresponding to RLC, one or more pieces of remaining time information (explicitly or implicitly) and a data volume associated with the one or more pieces of remaining time information. For example, for data whose remaining time is greater than the second time threshold, the PDCP entity may indicate a data volume to the MAC entity corresponding to RLC.

For example, the non-split RB scenario may include/be understood as: The PDCP entity does not distinguish data. For example, the PDCP entity delivers I-frame data (or important data) and P-frame data (or unimportant data) to a same RLC entity.

For example, the split RB scenario may include/be understood as: The PDCP entity distinguishes data. For example, the PDCP entity does not deliver the I-frame data (or important data) and the P-frame data (or unimportant data) to a same RLC entity. For example, the PDCP entity is associated with two or more RLC entities. The PDCP entity submits the I-frame data (or important data) to an RLC entity associated with the I-frame data (or important data), and the PDCP entity submits the P-frame data (or unimportant data) to an RLC entity associated with the P-frame data (or unimportant data).

For example, there are two or more pieces of data corresponding to different remaining times, and the PDCP entity may indicate two or more pieces of remaining time information to the MAC entity corresponding to RLC.

For example, in a CA and DC scenario or a split RB scenario, the PDCP may distinguish data when submitting the data to the RLC entity. For example, the PDCP entity may be associated with two or more different RLC entities. In other words, one PDCP entity may be connected to a plurality of RLC entities. For example, for data associated with an RLC entity, for data whose remaining time is less than the first time threshold, the PDCP entity may indicate, to a MAC entity corresponding to RLC, one or more pieces of remaining time information (explicitly or implicitly) and one or more data volumes corresponding to the one or more pieces of remaining time information. For example, for data associated with an RLC entity, for data whose remaining time is greater than the second time threshold, the PDCP entity may indicate a data volume to a MAC entity corresponding to RLC.

By way of example and not limitation, if the PDCP entity is associated with both an RLC entity related to an I-frame and an RLC entity related to the P-frame, the PDCP entity may deliver I-frame data to the RLC entity related to the I-frame, and deliver P-frame data to the RLC entity related to a P-frame. For example, for I-frame data whose remaining time is less than the first time threshold, the PDCP entity may indicate, to a MAC entity corresponding to RLC related to the I-frame, one or more pieces of remaining time information (explicitly or implicitly) and one or more data volumes corresponding to the one or more pieces of remaining time information. For example, for I-frame data whose remaining time is greater than the second time threshold, the PDCP entity may indicate a data volume to the MAC entity corresponding to RLC related to the I-frame. For example, for P-frame data whose remaining time is less than the first time threshold, the PDCP entity may indicate, to a MAC entity corresponding to RLC related to the P-frame, one or more pieces of remaining time information (explicitly or implicitly) and one or more data volumes corresponding to the one or more pieces of remaining time information. For example, for P-frame data whose remaining time is greater than the second time threshold, the PDCP entity may indicate a data volume to the MAC entity corresponding to RLC related to the P-frame.

Case 2: Remaining time information is indicated for all data.

For example, the PDCP entity of the terminal apparatus may indicate, for each piece of data, a data volume and (implicit or explicit) remaining time information corresponding to the data volume.

For example, in an SA scenario or a non-split RB scenario, the PDCP entity may not distinguish data when submitting the data to the RLC entity. For example, one PDCP entity is connected to one RLC entity, the PDCP entity may submit all data to the RLC entity, and the PDCP entity may indicate a PDCP data volume to a MAC entity corresponding to RLC. For example, the PDCP entity may indicate, to the MAC entity corresponding to the RLC, one or more pieces of remaining time information (explicitly or implicitly) and a data volume associated with the one or more pieces of remaining time information.

For example, there are two or more pieces of data corresponding to different remaining times, and the PDCP entity may indicate two or more pieces of remaining time information to the MAC entity corresponding to RLC.

For example, in a CA and DC scenario or a split RB scenario, the PDCP may distinguish data when submitting the data to the RLC entity. For example, the PDCP entity may be associated with two or more different RLC entities. In other words, one PDCP entity may be connected to a plurality of RLC entities. For example, for data associated with an RLC entity, the PDCP entity may indicate, to a MAC entity corresponding to RLC, one or more pieces of remaining time information (explicitly or implicitly) and one or more data volumes corresponding to the one or more pieces of remaining time information.

By way of example and not limitation, if the PDCP entity is associated with both an RLC entity related to an I-frame and an RLC entity related to the P-frame, the PDCP entity may deliver I-frame data to the RLC entity related to the I-frame, and deliver P-frame data to the RLC entity related to a P-frame. For example, for the I-frame data, the PDCP entity may indicate, to the MAC entity corresponding to RLC related to the I-frame, one or more pieces of remaining time information (explicitly or implicitly) and one or more data volumes corresponding to the one or more pieces of remaining time information. For example, for the P-frame data, the PDCP entity may indicate, to the MAC entity corresponding to RLC related to the P-frame, one or more pieces of remaining time information (explicitly or implicitly) and one or more data volumes corresponding to the one or more pieces of remaining time information.

Optionally, the terminal apparatus may include the data volume of the control PDU in a data volume corresponding to data with a minimum remaining time, or a data volume corresponding to a minimum remaining time. For example, the data volume corresponding to the minimum remaining time may include: a remaining time of the control PDU is the minimum remaining time. For example, a minimum remaining time is generated for the control PDU. For example, the data volume corresponding to the minimum remaining time may include a data volume of data, or may not include the data volume of the data.

In this embodiment of this application, the data volume of the control PDU is included in the data volume corresponding to the data with a minimum remaining time or the data volume corresponding to a minimum remaining time, so that the network apparatus can appropriately allocate a transmission resource based on the BSR reported by the terminal apparatus. This facilitates uplink resource scheduling of the network apparatus, and also benefits performance of the terminal apparatus, thereby ensuring normal service provision. Otherwise, if the data volume of the control PDU is included in a data volume corresponding to data with a relatively long remaining time, as a result, a resource allocated by a base station for data with a relatively short remaining time may be insufficient to transmit the control PDU and a data PDU. Consequently, the data PDU cannot be transmitted in accordance with the delay requirement. This results in a negative impact on service performance.

FIG. 11 shows a communication method according to an embodiment of this application. The method includes the following steps.

Optionally, S1101: A terminal apparatus triggers a second BSR.

For example, for content related to "a terminal apparatus triggers a second BSR" or content related to the second BSR, reference may be made to the content in the embodiment shown in FIG. 5. Details are not described herein again.

Optionally, S1102: The terminal apparatus obtains a first resource.

For example, for content related to "the terminal apparatus obtains a first resource" or content related to the first resource, reference may be made to the content in the embodiment shown in FIG. 5. Details are not described herein again.

Optionally, S1103: A MAC entity of the terminal apparatus indicates first information to a first entity of the terminal apparatus.

For example, the first information may be used for requesting a data volume; or used for requesting the first entity of the terminal apparatus to perform S1104; or used for indicating that the terminal apparatus is to generate or send the second BSR.

For example, the second BSR is associated with the first entity. For example, the second BSR is associated with an LCH corresponding to the first entity.

S1104: The first entity of the terminal apparatus indicates N data volumes to a first MAC entity of the terminal apparatus.

Optionally, N is greater than or equal to 2.

Optionally, N is greater than or equal to 1.

Optionally, the N data volumes may include data volumes of all data in the first entity.

Optionally, this application may further include: The first entity may indicate, to the first MAC entity, remaining times associated with the N data volumes.

For example, the remaining times associated with the N data volumes may include remaining times associated with M data volumes in the N data volumes.

In a possible implementation, the first entity may indicate, to the first MAC entity, the remaining times associated with the M data volumes in the N data volumes.

For example, the first entity may indicate, to the first MAC entity, Q remaining times associated with the M data volumes in the N data volumes.

Optionally, M may be equal to Q, or M may be greater than Q. For example, the M data volumes are in one-to-one correspondence with the Q remaining times.

For example, M is less than or equal to N. For example, M+1=N.

Optionally, remaining times corresponding to M data volumes (for example, M data volumes associated with the Q remaining times) are less than or equal to a first time threshold; or remaining times corresponding to data corresponding to M data volumes (for example, M data volumes associated with the Q remaining times) are less than or equal to the first time threshold.

Optionally, remaining times corresponding to N-M data volumes (for example, N-M data volumes not associated with the Q remaining times) are greater than a second time threshold; or remaining times corresponding to data corresponding to N-M data volumes (for example, N-M data volumes not associated with the Q remaining times) are greater than the second time threshold.

For example, the first time threshold and the second time threshold may be the same, or may be different. This is not limited.

In another possible implementation, the first entity may indicate, to the first MAC entity, the remaining times associated with the N data volumes.

For example, the first entity may indicate, to the first MAC entity, Q remaining times associated with the N data volumes.

Optionally, N may be equal to Q, or N may be greater than Q. For example, the N data volumes are in one-to-one correspondence with the Q remaining times.

Optionally, remaining times corresponding to the N data volumes are less than or equal to the first time threshold; or a remaining time corresponding to data corresponding to the N data volumes is less than or equal to the first time threshold.

For example, data volume may include/be replaced with information about data volume.

For example, a remaining time may include/be replaced with remaining time information.

For example, the data volume may be 0 or not 0. For example, one or more of the N data volumes are 0.

Optionally, the first entity may include a first RLC entity.

Optionally, the first entity may include a first PDCP entity. For example, the first PDCP entity is associated with the first RLC entity. For example, the first MAC entity is associated with the first RLC entity of the terminal apparatus.

Optionally, the N data volumes may include a first data volume.

For example, the first data volume may include a data volume of a control protocol data unit control PDU set, where the first data volume may correspond to a minimum remaining time, or the first data volume includes a data volume of a first data set, and a remaining time corresponding to the first data set may be less than a remaining time corresponding to another data set in the first entity different from the first data set.

For example, the minimum remaining time may be a minimum remaining time that can be indicated by a BSR.

For example, the data volume of the control PDU set may be included in a data volume corresponding to data with a minimum remaining time, or a data volume corresponding to a minimum remaining time.

For example, the first data volume or the data volume corresponding to the minimum remaining time may include only the data volume of the control PDU set, or may further include a data volume of other data.

For example, the first data volume or the data volume corresponding to the minimum remaining time may include or may not include a data volume of data other than the control PDU set. This is not limited.

For example, the control PDU set may include one or more control PDUs.

Optionally, if a first condition is met, the first entity of the terminal apparatus performs S1104.

For example, the first condition includes at least one of condition 1, condition 2, condition 3, condition 4, condition 5, condition 6, condition 7, condition 8, or condition 9.

For example, for content related to condition 1, condition 2, condition 3, condition 4, condition 5, condition 6, condition 7, condition 8, and condition 9, reference may be made to the content in the embodiment shown in FIG. 5. Details are not described herein again.

For example, for an XR service, UE may not only need to report a buffer report, but also need to indicate corresponding remaining time information. For example, for reporting of a data volume (or a buffer status) of the XR service, there may be possibility 1 and/or possibility 2.

For example, a reporting granularity of a data volume (or a buffer status) may be any one or more of the following: per logical channel group LCG, or per logical channel LCH, or per data burst (data burst), or per PDU set, or per remaining time, or per protocol data unit PDU, or per service data unit (Service Data Unit, SDU).

For example, the data volume may be indicated per data burst (data burst), or per PDU set, or per remaining time, or per protocol data unit PDU, or per service data unit (Service Data Unit, SDU).

Optionally, in S1105, the terminal apparatus determines a first BSR based on the N data volumes, or the terminal apparatus determines to trigger the second BSR, or the terminal apparatus determines the first BSR based on the N data volumes.

Optionally, "the terminal apparatus determines a first BSR based on the N data volumes, or determines to trigger the second BSR" may include/be replaced with: The terminal apparatus determines the first BSR based on the N data volumes and/or the remaining times associated with the N data volumes, or determines to trigger the second BSR.

For example, determining may include/be replaced with: generating.

For example, determining to trigger may include/be replaced with: triggering.

Optionally, S1106: The terminal apparatus sends the first BSR.

Correspondingly, a network apparatus receives the first BSR from the terminal apparatus.

Optionally, the network apparatus allocates a transmission resource to the terminal apparatus based on the first BSR.

For example, in this embodiment of this application, for a problem that existing indication of a PDCP data volume and indication of an RLC data volume cannot meet/match reporting of a BSR that can indicate (explicitly or implicitly) remaining time information, the first entity of the terminal apparatus may indicate one or more data volumes to the MAC entity, to cause indication of the PDCP data volume and indication of the RLC data volume to match the reporting of the BSR that can indicate (explicitly or implicitly) the remaining time information, so that the network apparatus can more clearly learn of a buffer status of the terminal apparatus, and the network apparatus can appropriately allocate a resource, to improve uplink resource utilization, avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

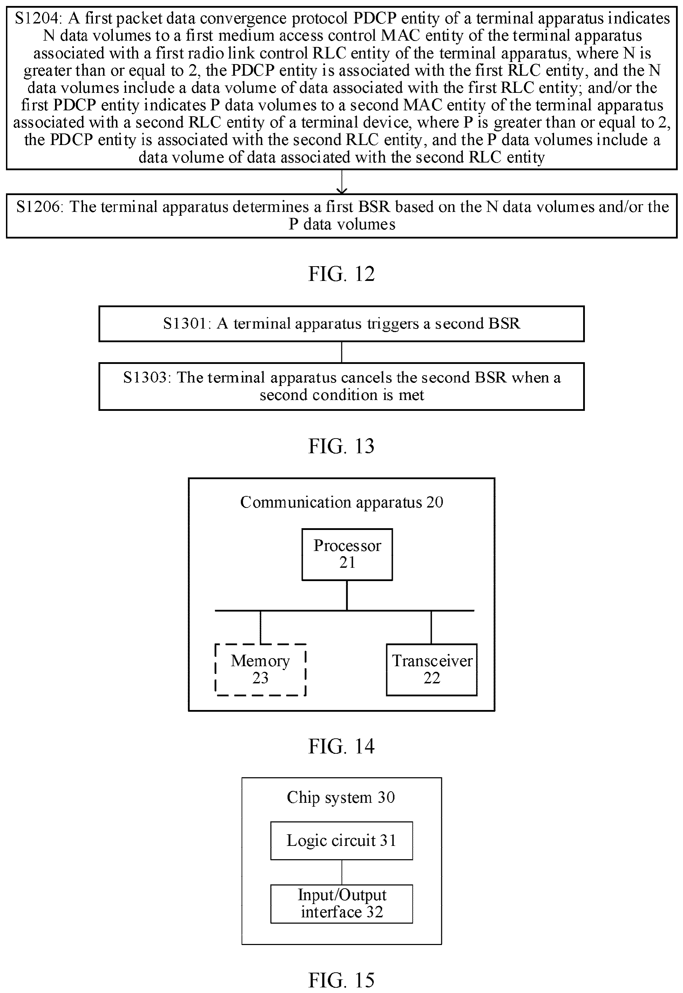

FIG. 12 shows another communication method according to an embodiment of this application. The method includes the following steps.

Optionally, S1201: A terminal apparatus triggers a second BSR.

For example, for content related to "a terminal apparatus triggers a second BSR" or content related to the second BSR, reference may be made to the content in the embodiment shown in FIG. 5. Details are not described herein again.

Optionally, S1202: The terminal apparatus obtains a first resource.

For example, for content related to "the terminal apparatus obtains a first resource" or content related to the first resource, reference may be made to the content in the embodiment shown in FIG. 5. Details are not described herein again.

Optionally, S1203: A first MAC entity of the terminal apparatus indicates first information to a first entity of the terminal apparatus.

For example, the first information may be used for requesting a data volume; or used for requesting the first entity of the terminal apparatus to perform S1104; or used for indicating that the terminal apparatus is to generate or send the second BSR.

For example, the second BSR is associated with the first entity. For example, the second BSR is associated with an LCH corresponding to the first entity.

For example, the first entity may include any one or more of the following: a first RLC entity, a second RLC entity, and a first PDCP entity.

For example, the terminal apparatus may perform S1204 and/or S1205.

S1204: The first PDCP entity of the terminal apparatus indicates N pieces of data volume information to the first MAC entity of the terminal apparatus.

For example, data volume information may include/be replaced with a data volume.

For example, a data volume may include/be replaced with data volume information.

Optionally, N is greater than or equal to 2.

Optionally, N is greater than or equal to 1.

For example, the first MAC entity of the terminal apparatus may be a MAC entity associated with the first RLC entity of the terminal apparatus.

For example, the first PDCP entity is associated with the first RLC entity and/or the second RLC entity. For example, the first RLC entity is associated with I-frame data or important data. For example, the second RLC entity is associated with P-frame data or unimportant data.

For example, N data volumes include a data volume of data associated with the first RLC entity. Optionally, the N data volumes do not include a data volume of data associated with the second RLC entity.

Optionally, this application may further include: The first PDCP entity may indicate, to the first MAC entity, remaining times associated with the N data volumes.

For example, the remaining times associated with the N data volumes may include remaining times associated with M data volumes in the N data volumes.

In a possible implementation, the first PDCP entity may indicate, to the first MAC entity, the remaining times associated with the M data volumes in the N data volumes.

For example, the first PDCP entity may indicate, to the first MAC entity, Q remaining times associated with the M data volumes in the N data volumes.

Optionally, M may be equal to Q, or M may be greater than Q. For example, the M data volumes are in one-to-one correspondence with the Q remaining times.

For example, M is less than or equal to N. For example, M+1=N.

Optionally, remaining times corresponding to M data volumes (for example, M data volumes associated with the Q remaining times) are less than or equal to a first time threshold; or remaining times corresponding to data corresponding to M data volumes (for example, M data volumes associated with the Q remaining times) are less than or equal to the first time threshold.

Optionally, remaining times corresponding to N-M data volumes (for example, N-M data volumes not associated with the Q remaining times) are greater than a second time threshold; or remaining times corresponding to data corresponding to N-M data volumes (for example, N-M data volumes not associated with the Q remaining times) are greater than the second time threshold.

For example, the first time threshold and the second time threshold may be the same, or may be different. This is not limited.

In another possible implementation, the first PDCP entity may indicate, to the first MAC entity, the remaining times associated with the N data volumes.

For example, the first PDCP entity may indicate, to the first MAC entity, Q remaining times associated with the N data volumes.

Optionally, N may be equal to Q, or N may be greater than Q. For example, the N data volumes are in one-to-one correspondence with the Q remaining times.

Optionally, remaining times corresponding to the N data volumes are less than or equal to the first time threshold; or a remaining time corresponding to data corresponding to the N data volumes is less than or equal to the first time threshold.

For example, data volume may include/be replaced with information about data volume.

For example, a remaining time may include/be replaced with remaining time information.

For example, the data volume may be 0 or not 0. For example, one or more of the N data volumes are 0.

Optionally, the N data volumes may include a first data volume.

For example, the first data volume may include a data volume of a control protocol data unit control PDU set, where the first data volume may correspond to a minimum remaining time, or the first data volume includes a data volume of a first data set, and a remaining time corresponding to the first data set may be less than a remaining time corresponding to another data set in the first PDCP entity that is different from the first data set and that is associated with the first RLC entity.

For example, the minimum remaining time may be a minimum remaining time that can be indicated by a BSR.

For example, the data volume of the control PDU set may be included in a data volume corresponding to data with a minimum remaining time, or a data volume corresponding to a minimum remaining time.

For example, the first data volume or the data volume corresponding to the minimum remaining time may include only the data volume of the control PDU set, or may further include a data volume of other data.

For example, the first data volume or the data volume corresponding to the minimum remaining time may include or may not include a data volume of data other than the control PDU set. This is not limited.

For example, the control PDU set may include one or more control PDUs.

S1205. The first PDCP entity indicates P pieces of data volume information to a second MAC entity of the terminal apparatus.

Optionally, P is greater than or equal to 2.

Optionally, P is greater than or equal to 1.

For example, the second MAC entity of the terminal apparatus may be a MAC entity associated with the second RLC entity of the terminal apparatus.

Optionally, the first MAC entity and the second MAC entity may be a same MAC entity, or may be different MAC entities.

For example, the first PDCP entity is associated with the first RLC entity and/or the second RLC entity. For example, the first RLC entity is associated with I-frame data or important data. For example, the second RLC entity is associated with P-frame data or unimportant data.

For example, P data volumes include the data volume of data associated with the second RLC entity. Optionally, the P data volumes do not include the data volume of data associated with the first RLC entity.

Optionally, this application may further include: The first PDCP entity may indicate, to the second MAC entity, remaining times associated with the P data volumes.

For example, the remaining times associated with the P data volumes may include remaining times associated with X data volumes in the P data volumes.

In a possible implementation, the first PDCP entity may indicate, to the second MAC entity, the remaining times associated with the X data volumes in the P data volumes.

For example, the first PDCP entity may indicate, to the second MAC entity, Q remaining times associated with the X data volumes in the P data volumes.

Optionally, X may be equal to Q, or X may be greater than Q. For example, the X data volumes are in one-to-one correspondence with the Q remaining times.

For example, X is less than or equal to P. For example, X+1=P.

Optionally, remaining times corresponding to X data volumes (for example, X data volumes associated with the Q remaining times) are less than or equal to the first time threshold; or remaining times corresponding to data corresponding to X data volumes (for example, X data volumes associated with the Q remaining times) are less than or equal to the first time threshold.

Optionally, remaining times corresponding to P-X data volumes (for example, P-X data volumes not associated with the Q remaining times) are greater than the second time threshold; or remaining times corresponding to data corresponding to P-X data volumes (for example, P-X data volumes not associated with the Q remaining times) are greater than the second time threshold.

In another possible implementation, the first PDCP entity may indicate, to the second MAC entity, the remaining times associated with the P data volumes.

For example, the first PDCP entity may indicate, to the second MAC entity, Q remaining times associated with the P data volumes.

Optionally, P may be equal to X, or P may be greater than X. For example, the P data volumes are in one-to-one correspondence with X remaining times.

Optionally, remaining times corresponding to the P data volumes are less than or equal to the first time threshold; or a remaining time corresponding to data corresponding to the P data volumes is less than or equal to the first time threshold.

For example, data volume may include/be replaced with information about data volume.

For example, a remaining time may include/be replaced with remaining time information.

For example, the data volume may be 0 or not 0. For example, one or more of the P data volumes are 0.

Optionally, the P data volumes may include a second data volume.

For example, the second data volume may include a data volume of a control protocol data unit control PDU set, where the second data volume may correspond to a minimum remaining time, or the second data volume includes a data volume of a second data set, and a remaining time corresponding to the second data set may be less than a remaining time corresponding to another data set in the first PDCP entity that is different from the second data set and that is associated with the second RLC entity.

For example, the minimum remaining time may be a minimum remaining time that can be indicated by a BSR.

For example, the data volume of the control PDU set may be included in a data volume corresponding to data with a minimum remaining time, or a data volume corresponding to a minimum remaining time.

For example, the second data volume or the data volume corresponding to the minimum remaining time may include only the data volume of the control PDU set, or may further include a data volume of other data.

For example, the second data volume or the data volume corresponding to the minimum remaining time may include or may not include a data volume of data other than the control PDU set. This is not limited.

Optionally, if a first condition is met, the first PDCP entity of the terminal apparatus performs S1204 and/or S1205.

For example, the first condition includes at least one of condition 1, condition 2, condition 3, condition 4, condition 5, condition 6, condition 7, condition 8, or condition 9.

For example, for content related to condition 1, condition 2, condition 3, condition 4, condition 5, condition 6, condition 7, condition 8, and condition 9, reference may be made to the content in the embodiment shown in FIG. 5. Details are not described herein again.

Optionally, S1206: The terminal apparatus determines a first BSR based on the N data volumes and/or the P data volumes, or the terminal apparatus determines to trigger the second BSR, or the terminal apparatus determines the first BSR based on the N data volumes and/or the P data volumes.

Optionally, "the terminal apparatus determines a first BSR based on N data volumes and/or P data volumes, or determines to trigger the second BSR" may include/be replace with: The terminal apparatus determines the first BSR based on one or more of the N data volumes, the P data volumes, the remaining times associated with the N data volumes, or the remaining times associated with the P data volumes, or determines to trigger the second BSR.

For example, determining may include/be replaced with: generating.

For example, determining to trigger may include/be replaced with: triggering.

S1207: The terminal apparatus sends the first BSR.

Correspondingly, a network apparatus receives the first BSR from the terminal apparatus.

Optionally, the network apparatus allocates a transmission resource to the terminal apparatus based on the first BSR.

For example, in this embodiment of this application, when indicating a data volume to the MAC entity of the terminal apparatus, the PDCP entity of the terminal apparatus indicates only one PDCP data volume for one RLC entity. This cannot meet/match reporting of a BSR that can indicate (explicitly or implicitly) remaining time information. The PDCP entity of the terminal apparatus may separately indicate one or more data volumes to one or more MAC entities associated with an RLC entity, to cause indication of the PDCP data volume and indication of the RLC data volume to match reporting of the BSR that can indicate (explicitly or implicitly) the remaining time information, so that the network apparatus can more clearly learn of a buffer status of the terminal apparatus, and the network apparatus can appropriately allocate a resource, to improve uplink resource utilization, avoid a resource waste (for example, avoid allocation of excessive resources), and/or improve data transmission reliability (for example, ensure that data of the terminal apparatus can be transmitted in accordance with a delay requirement), thereby increasing a system capacity, and/or ensuring service transmission reliability and/or service transmission quality.

A BSR that has been triggered can be canceled under a specific condition. For example, all triggered BSRs may be cancelled when an uplink grant can accommodate all pending transmittable data but is not sufficient to accommodate an additional BSR MAC CE and a MAC subheader of the BSR MAC CE. For example, during sending of a MAC PDU including a BSR MAC CE, all BSRs triggered before MAC PDU encapsulation may be canceled.

For an XR service, there may be a BSR that has been triggered, but before the BSR is sent, data that triggers the BSR may be discarded. In this case, if the BSR is still sent, an air interface resource is wasted.

FIG. 13 shows another communication method according to an embodiment of this application. The method includes the following steps.

S1301: A terminal apparatus triggers a second BSR.

For example, for content related to "a terminal apparatus triggers a second BSR" or content related to the second BSR, reference may be made to the content in the embodiment shown in FIG. 5. Details are not described herein again.

For example, the second BSR is triggered because of first data.

Optionally, S1302: A terminal apparatus triggers a second SR.

For example, because there is no resource to send a BSR or the second BSR, the second SR is triggered.

For example, the second SR is triggered because of the first data/the second BSR.

S1303: The terminal apparatus cancels the second BSR when a second condition is met.

For example, the second condition may include any one or more of the following: the second BSR is not canceled; or a buffer status corresponding to the first data is not reported to a network device; or the first data is discarded.

Optionally, S1304: The terminal apparatus cancels the second SR when the second condition is met.

For example, after a BSR is triggered and before the BSR is sent, if data triggering the BSR is discarded, the terminal apparatus may cancel the triggered BSR and/or an SR corresponding to the triggered BSR.

According to the method shown in FIG. 13, when the second condition is met, the terminal apparatus cancels the second BSR and/or the second SR, so that unnecessary BSR/SR sending can be avoided, and air interface resources can be saved.

It should be noted that the communication method provided above may be implemented separately, or may be implemented in combination. This is not specifically limited in this application. In addition, for related concepts and steps in the communication method provided above, mutual reference may be made to each other, and some content is not described again in this application.

It should be understood that a conventional technology may change with evolution of technical solutions, and the technical solutions provided in this application are not limited to the provided conventional technology.

It should be noted that different embodiments of this application or some steps (for example, any one or more steps) in different embodiments may be combined with each other to form a new embodiment. It should be noted that a part of steps or any one or more steps in different embodiments may include an optional step in an embodiment, or may include a mandatory step in an embodiment, or may include an optional step and a mandatory step in an embodiment. This is not limited in this application.

It should be noted that, unless otherwise specified or a logical conflict occurs, terms and/or descriptions in different embodiments are consistent and may be mutually referenced.

It should be noted that a sequence of steps in embodiments of this application is not limited in this application.

It should be noted that a determining sequence of different conditions in embodiments of this application is not limited in this application.

It should be noted that "after" and "when" in this application do not strictly limit a time point.

It should be noted that nouns, terms, and the like in this application are merely examples, and may also have other names. This is not limited in this application.

With reference to FIG. 4 to FIG. 13, the foregoing describes in detail method embodiments of BSR indication in this application. The foregoing embodiments are mainly described from a perspective of interaction between devices. The following describes apparatus embodiments of this application in detail. It should be understood that descriptions of the method embodiments correspond to descriptions of the apparatus embodiments. Therefore, for a part that is not described in detail, reference may be made to the foregoing method embodiments. In addition, to implement the foregoing functions, each apparatus includes corresponding hardware structures and/or software modules for performing the functions.

For example, FIG. 14 shows a communication apparatus 20 according to an embodiment of this application. As shown in FIG. 14, the apparatus 20 includes a processor 21 and a transceiver 22. The processor 21 and the transceiver 22 communicate with each other through an internal connection path, and the processor 21 is configured to execute instructions, to control the transceiver 22 to send a signal and/or receive a signal.

Optionally, the apparatus 20 may further include a memory 23. The memory 23 communicates with the processor 21 and the transceiver 22 through internal connection paths. The memory 23 is configured to store instructions, and the processor 21 may execute the instructions stored in the memory 23.

In a possible implementation, the apparatus 20 is configured to implement procedures and steps corresponding to the terminal apparatus in the foregoing method embodiments.

In another possible implementation, the apparatus 20 is configured to implement procedures and steps corresponding to the network apparatus (for example, the base station) in the foregoing method embodiments.

It should be understood that the apparatus 20 may be specifically the terminal apparatus or the network apparatus in the foregoing embodiments, or may be a chip or a chip system of the terminal apparatus or the network apparatus. Correspondingly, the transceiver 22 may be a transceiver circuit of the chip. This is not limited herein. Specifically, the apparatus 20 may be configured to perform the steps and/or procedures corresponding to the network apparatus or the terminal apparatus in the foregoing method embodiments.

Optionally, the memory 23 may include a read-only memory and a random access memory, and provide instructions and data to the processor. A part of the memory may further include a non-volatile random access memory. For example, the memory may further store information about a device type. The processor 21 may be configured to execute the instructions stored in the memory. When the processor 21 executes the instructions stored in the memory, the processor 21 is configured to perform steps and/or procedures in the foregoing method embodiments corresponding to a transmit end or a receive end.

It may be understood that, for functions and corresponding operations of modules of the communication apparatus in embodiments of this application, reference may be made to related descriptions in the method embodiments. In addition, the module in embodiments of this application may also be referred to as a unit, a circuit, or the like. This is not limited in embodiments of this application.

It may be understood that the communication apparatus may perform part or all of the steps in the foregoing embodiments. These steps or operations are merely examples. In embodiments of this application, other operations or variants of the operations may be further performed. In addition, the steps may be performed in another sequence different from that presented in the foregoing embodiments, and it is possible that not all the operations in the foregoing embodiments need to be performed.

FIG. 15 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to cause the chip system 30 to implement the methods and functions in embodiments of this application. The input/output interface 32 may be an input/output circuit in the chip system 30, and output information processed by the chip system 30, or input to-be-processed data or signaling information to the chip system 30 for processing.

In a solution, the chip system 30 is configured to implement operations performed by the terminal apparatus and the network apparatus in the foregoing method embodiments.

For example, the logic circuit 31 is configured to implement processing-related operations performed by the terminal device or the network apparatus in the foregoing method embodiments. The input/output interface 32 is configured to implement sending and/or receivingrelated operations performed by the terminal device or the network apparatus in the foregoing method embodiments.

An embodiment of this application further provides a communication apparatus, including a module configured to perform the method in any one of the foregoing embodiments.

An embodiment of this application further provides a computer-readable storage medium. The computer-readable storage medium stores a computer program. When the computer program is run on a terminal apparatus or a network apparatus, the terminal apparatus or the network apparatus is caused to perform the method in any one of the foregoing embodiments.

An embodiment of this application further provides a computer program product. The computer program product includes instructions. When the instructions are run on a computer, the method in any one of the foregoing embodiments is performed.

An embodiment of this application further provides a computer program. When the computer program is run on a computer, the method in any one of the foregoing embodiments is implemented.

This application further provides a chip, including a processor and a memory. The memory stores instructions, and the processor is configured to invoke, from the memory, and run the instructions stored in the memory, to cause a terminal apparatus or a network apparatus in which the chip is mounted to perform the method in any one of the foregoing embodiments.

An embodiment of this application further provides a communication system, including a network apparatus and a terminal apparatus. The terminal apparatus is configured to perform the steps performed by the terminal apparatus in the method in the foregoing embodiments, and the network apparatus is configured to perform the steps performed by the network apparatus in the method in the foregoing embodiments.

In an implementation process, steps in the foregoing method can be implemented by using a hardware integrated logical circuit in the processor, or by using instructions in a form of software. The steps of the method disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory in the system and method described in this specification includes but is not limited to these or any memory of another proper type.

A person of ordinary skill in the art may be aware that units and algorithm steps described in the examples with reference to embodiments disclosed in this specification may be implemented by electronic hardware or a combination of computer software and electronic hardware. Whether the functions are performed by hardware or software depends on particular applications and design constraint conditions of the technical solutions.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. The apparatus embodiments described above are merely examples. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When functions are implemented in a form of software functional units and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for enabling a computer device (which may be a personal computer, a server, a network apparatus, or the like) to perform all or a part of steps of the method described in embodiments of this application. The foregoing storage medium includes any medium that can store program code, such as a USB flash drive, a removable hard disk drive, a read-only memory, a random access memory, a magnetic disk, or an optical disc.

The foregoing descriptions are merely specific implementations of this application, but are not intended to limit the protection scope of this application. Any variation or replacement readily conceived of by a person skilled in the art within the technical scope disclosed in this application shall fall within the protection scope of this application. Therefore, the protection scope of this application shall be subject to the protection scope of the claims.

## Claims

1. A communication method, comprising:
indicating, by a first entity of a terminal apparatus, N data volumes to a first medium access control MAC entity of the terminal apparatus, wherein N is greater than or equal to 2; and
determining, by the terminal apparatus, a first buffer status report BSR based on the N data volumes.

2. The method according to claim 1, wherein the method further comprises:
indicating, by the first entity to the first MAC entity, remaining times associated with the N data volumes.

3. The method according to claim 1 or 2, wherein the first entity comprises a first radio link control RLC entity.

4. The method according to claim 1 or 3, wherein the first entity comprises a first packet data convergence protocol PDCP entity, the first MAC entity is associated with the first RLC entity of the terminal apparatus, and the first PDCP entity is associated with the first RLC entity.

5. The method according to any one of claims 1 to 4, wherein the N data volumes comprise a first data volume, wherein the first data volume comprises a data volume of a control protocol data unit control PDU set, and the first data volume corresponds to a minimum remaining time; or the first data volume comprises a data volume of a first data set, and a remaining time corresponding to the first data set is less than a remaining time corresponding to another data set in the first entity different from the first data set.

6. The method according to claim 2, wherein the remaining time is less than or equal to a first time threshold.

7. A communication method, comprising:
indicating, by a first packet data convergence protocol PDCP entity of a terminal apparatus, N data volumes to a first medium access control MAC entity of the terminal apparatus associated with a first radio link control RLC entity of the terminal apparatus, wherein N is greater than or equal to 2; and/or
indicating, by the first PDCP entity, P data volumes to a second medium access control MAC entity of the terminal apparatus associated with a second radio link control RLC entity of the terminal apparatus, wherein P is greater than or equal to 2; and
determining, by the terminal apparatus, a first BSR based on the N data volumes and/or the P data volumes, wherein
the first PDCP entity is associated with the first RLC entity and the second RLC entity;
the N data volumes comprise a data volume of data associated with the first RLC entity; and
the P data volumes comprise a data volume of data associated with the second RLC entity.

8. The method according to claim 7, wherein the method further comprises:
indicating, by the first PDCP entity to the first MAC entity associated with the first RLC entity, remaining times associated with the N data volumes; and/or
indicating, by the first PDCP entity to the second MAC entity associated with the second RLC entity, remaining times associated with the P data volumes.

9. The method according to claim 7 or 8, wherein
the N data volumes comprise a first data volume, wherein the first data volume comprises a data volume of a control protocol data unit control PDU set, and the first data volume corresponds to a minimum remaining time; or the first data volume comprises a data volume of a first data set, and a remaining time corresponding to the first data set is less than or equal to a remaining time corresponding to another data set in the first PDCP entity that is different from the first data set and that is associated with the first RLC entity; and/or
the P data volumes comprise a second data volume, wherein the second data volume comprises a data volume of a control protocol data unit control PDU set, and the second data volume corresponds to the minimum remaining time; or the second data volume comprises a data volume of a second data set, and a remaining time corresponding to the second data set is less than a remaining time corresponding to another data set in the first PDCP entity that is different from the second data set and that is associated with the second RLC entity.

10. A communication apparatus, comprising:
a processor, wherein the processor is coupled to a memory, the memory stores a computer program, and when the processor executes the computer program, the communication apparatus is caused to perform the method according to any one of claims 1 to 9.

11. A communication apparatus, wherein the apparatus comprises a module configured to perform the method according to any one of claims 1 to 9.

12. A computer-readable storage medium, wherein the computer-readable storage medium stores a computer program, and when the computer program is run on a communication apparatus, the communication apparatus is caused to perform the method according to any one of claims 1 to 9.

13. A computer program product, comprising instructions, wherein when the instructions are run on a computer, the method according to any one of claims 1 to 9 is performed.
